# EUROPEAN PATENT APPLICATION

(11) **EP 4 588 902 A1**
(43) Date of publication of application: **23.07.2025**
(21) Application number: 25151259.6
(22) Date of filing: 10.01.2025
(51) Int. Cl.: C03C 3/23, C03C 10/16, H01M 10/052, C01F 7/78, C01G 30/00, C01G 31/00, C03C 4/18

(54) **SOLID ELECTROLYTE, METHOD OF MANUFACTURING THE SAME, AND LITHIUM BATTERY INCLUDING THE SOLID ELECTROLYTE**

(30) Priority: 22.01.2024 KR 20240009792
(71) Applicant: Samsung Electronics Co., Ltd., Suwon-si, Gyeonggi-do 16677 (KR)
(72) Inventor: PARK, Hwiyeol, Suwon-si 16678 (KR); LIM, Sungjin, Suwon-si 16678 (KR); LEE, Heungchan, Suwon-si 16678 (KR)
(74) Representative: Elkington and Fife LLP

(57) **Abstract**

A solid electrolyte, a method of manufacturing the same, and a lithium battery including the solid electrolyte. The solid electrolyte may include a solid ion conductor represented by Formula 1:

Formula 1 LiₐB_{b}AlₘQₙO_{c}X_{d}

wherein, in Formula 1, Q is an element that has an ionic radius that differs from an ionic radius of Al by less than 30 % and has +3 and +5 valence states, X is at least one of F, Cl, Br, or I, 3.5 ≤ a ≤ 4.5, 3 ≤ b < 5.2, 1 ≤ m ≤ 3, 0 < n < 2, 11 ≤ c ≤ 13, and 0 < d ≤ 1.5.

## Description

### FIELD OF THE INVENTION

The present disclosure relates to a solid electrolyte, a method of manufacturing the same, and a lithium battery including the solid electrolyte.

### BACKGROUND OF THE INVENTION

Lithium batteries generally have a high energy density per unit volume, and thus are widely used in automobiles and various portable electronic devices. However, lithium batteries currently in use have liquid electrolytes, which have safety issues related to ignition.

To improve the safety of lithium batteries, the use of polymer solid electrolytes, sulfide solid electrolytes, and oxide solid electrolytes instead of liquid electrolytes has been the focus of research. Polymer solid electrolytes are typically vulnerable to thermal stability, and thus may deteriorate at high temperatures. Sulfide solid electrolytes often have high reactivity in the air or with cathode active materials, and thus may be difficult to handle on their own. Oxide solid electrolytes generally have low ionic conductivity and high sintering temperatures, and thus, when manufacturing lithium batteries, the oxide solid electrolytes may react at the interface between a solid electrolyte and an electrode active material, resulting in a rapid reduction in battery performance.

Therefore, there is still a need for a solid electrolyte that can provide high density and high ionic conductivity at a low sintering temperature, a method of manufacturing the same, and a lithium battery including the same.

### SUMMARY OF THE INVENTION

Provided is a solid electrolyte that may achieve high density and high ionic conductivity at a low sintering temperature.

Provided is a method of manufacturing the solid electrolyte.

Provided is a lithium battery including the solid electrode.

Additional aspects will be set forth in part in the description which follows and, in part, will be apparent from the description, or may be learned by practice of the presented embodiments of the disclosure.

According to an aspect of the disclosure, a solid electrolyte includes a solid ion conductor represented by Formula 1:

Formula 1 LiₐB_{b}AlₘQnO_{c}X_{d}

wherein, in Formula 1, Q is an element that has an ionic radius that differs from an ionic radius of Al by less than 30 % and has +3 and +5 valence states, X is at least one of F, Cl, Br, or I, 3.5 ≤ a ≤ 4.5, 3 ≤ b < 5.2, 1 ≤ m ≤ 3, 0 < n < 2, 11 ≤ c ≤ 13, and 0 < d ≤ 1.5.

According to an embodiment, in Formula 1, the ionic radius of Q may be about 50 picometers (pm) to about 100 pm.

According to an embodiment, in Formula 1, Q may include at least one of Sb or V.

According to an embodiment, in Formula 1, Q may be a substitutional dopant that substitutes for at least one of a B or an Al in Formula 1.

According to an embodiment, in Formula 1, 0 < n < 1.

According to an embodiment, the solid ion conductor may include at least one of Li₄B_{5.1}Al_{1.8}Sb_{0.1}O₁₂F, Li₄B₅Al_{1.8}Sb_{0.2}O₁₂F, Li₄B_{4.9}Al_{1.8}Sb_{0.3}O₁₂F, Li₄B_{4.8}Al_{1.8}Sb_{0.4}O₁₂F, Li₄B_{4.7}Al_{1.8}Sb_{0.5}O₁₂F, Li₄B_{4.6}Al_{1.8}Sb_{0.6}O₁₂F, Li₄B_{4.5}Al_{1.8}Sb_{0.7}O₁₂F, Li₄B_{4.4}Al_{1.8}Sb_{0.8}O₁₂F, Li₄B_{4.3}Al_{1.8}Sb_{0.9}O₁₂F,
Li₄B_{5.1}Al_{1.8}Sb_{0.1}O₁₂Cl, Li₄B₅Al_{1.8}Sb_{0.2}O₁₂Cl, Li₄B_{4.9}Al_{1.8}Sb_{0.3}O₁₂Cl, Li₄B_{4.8}Al_{1.8}Sb_{0.4}O₁₂Cl, Li₄B_{4.7}Al_{1.8}Sb_{0.5}O₁₂Cl, Li₄B_{4.6}Al_{1.8}Sb_{0.6}O₁₂Cl, Li₄B_{4.5}Al_{1.8}Sb_{0.7}O₁₂Cl, Li₄B_{4.4}Al_{1.8}Sb_{0.8}O₁₂Cl, Li₄B_{4.3}Al_{1.8}Sb_{0.9}O₁₂Cl,
Li₄B_{5.1}Al_{1.8}Sb_{0.1}O₁₂Br, Li₄B₅Al_{1.8}Sb_{0.2}O₁₂Br, L₁₄B_{4.9}Al_{1.8}Sb_{0.3}O₁₂Br, L₁₄B_{4.8}Al_{1.8}Sb_{0.4}O₁₂Br, Li₄B_{4.7}Al_{1.8}Sb_{0.5}O₁₂Br, Li₄B_{4.6}Al_{1.8}Sb_{0.6}O₁₂Br, Li₄B_{4.5}Al_{1.8}Sb_{0.7}O₁₂Br, Li₄B_{4.4}Al_{1.8}Sb_{0.8}O₁₂Br, Li₄B_{4.3}Al_{1.8}Sb_{0.9}O₁₂Br,
Li₄B_{5.1}Al_{1.8}Sb_{0.1}O₁₂I, Li₄B₅Al_{1.8}Sb_{0.2}O₁₂I, Li₄B_{4.9}Al_{1.8}Sb_{0.3}O₁₂I, Li₄B_{4.8}Al_{1.8}Sb_{0.4}O₁₂I, Li₄B_{4.7}Al_{1.8}Sb_{0.5}O₁₂I, Li₄B_{4.6}Al_{1.8}Sb_{0.6}O₁₂I, Li₄B_{4.5}Al_{1.8}Sb_{0.7}O₁₂I, Li₄B_{4.4}Al_{1.8}Sb_{0.8}O₁₂I, Li₄B_{4.3}Al_{1.8}Sb_{0.9}O₁₂I,
Li₄B_{5.1}Al_{1.8}V_{0.1}O₁₂F, Li₄B₅Al_{1.8}V_{0.2}O₁₂F, Li₄B_{4.9}Al_{1.8}V_{0.3}O₁₂F, Li₄B_{4.8}Al_{1.8}V_{0.4}O₁₂F, Li₄B_{4.7}Al_{1.8}V_{0.5}O₁₂F, Li₄B_{4.6}Al_{1.8}V_{0.6}O₁₂F, Li₄B_{4.5}Al_{1.8}V_{0.7}O₁₂F, Li₄B_{4.4}A_{1.8}V_{0.8}O₁₂F, Li₄B_{4.3}Al_{1.8}V_{0.9}O₁₂F,
Li₄B_{5.1}Al_{1.8}V_{0.1}O₁₂Cl, Li₄B₅Al_{1.8}V_{0.2}O₁₂Cl, Li₄B_{4.9}Al_{1.8}V_{0.3}O₁₂Cl, Li₄B_{4.8}Al_{1.8}V_{0.4}O₁₂Cl, Li₄B_{4.7}Al_{1.8}V_{0.5}O₁₂Cl, Li₄B_{4.6}Al_{1.8}V_{0.6}O₁₂Cl, Li₄B_{4.5}Al_{1.8}V_{0.7}O₁₂Cl, Li₄B_{4.4}Al_{1.8}V_{0.8}O₁₂Cl, Li₄B_{4.3}Al_{1.8}V_{0.9}O₁₂Cl,
Li₄B_{5.1}Al_{1.8}V_{0.1}O₁₂Br, Li₄B₅Al_{1.8}V_{0.2}O₁₂Br, Li₄B_{4.9}Al_{1.8}V_{0.3}O₁₂Br, L₁₄B_{4.8}Al_{1.8}V_{0.4}O₁₂Br, L₁₄B_{4.7}Al_{1.8}V_{0.5}O₁₂Br, Li₄B_{4.6}Al_{1.8}V_{0.6}O₁₂Br, Li₄B_{4.5}Al_{1.8}V_{0.7}O₁₂Br, Li₄B_{4.4}Al_{1.8}V_{0.8}O₁₂Br, Li₄B_{4.3}Al_{1.8}V_{0.9}O₁₂Br,
Li₄B_{5.1}Al_{1.8}V_{0.1}O₁₂I, Li₄B₅Al_{1.8}V_{0.2}O₁₂I, Li₄B_{4.9}Al_{1.8}V_{0.3}O₁₂I, Li₄B_{4.8}Al_{1.8}V_{0.4}O₁₂I, Li₄B_{4.7}Al_{1.8}V_{0.5}O₁₂I, Li₄B_{4.6}Al_{1.8}V_{0.6}O₁₂I, Li₄B_{4.5}Al_{1.8}V_{0.7}O₁₂I, Li₄B₄ or Li₄B_{4.3}Al_{1.8}V_{0.9}O₁₂I.

According to an embodiment, the solid ion conductor may be at least one of a glassy solid ion conductor or a crystalline solid ion conductor.

According to an embodiment, the solid electrolyte may have a crystallization temperature (Tc) of about 400 °C to about 600 °C, and a glass transition temperature (Tg) of about 400 °C to about 432 °C as measured by differential scanning calorimetry of the solid ion conductor.

According to an embodiment, the solid ion conductor may have a density of about 1.5 grams per cubic centimeter (g/cm³) to about 3.0 g/cm³ when measured by a gas pycnometer.

According to an embodiment, the solid ion conductor may have an ionic conductivity of about 3.4 × 10⁻⁶ siemens per centiemter (Scm⁻¹) to about 5.0 × 10⁻⁶ Scm⁻¹ at 25 °C.

According to an embodiment, the solid ion conductor may include a composite solid ion conductor that further includes a crystalline solid ion conductor represented by 2:

Formula 2 Lia1 B_{b1}Alm1 O_{c1}X_{d1}

wherein, in Formula 2, X may be at least one of F, Cl, Br, or I, 3.5 ≤ a1 ≤ 4.5, 3 ≤ b1 < 5.2, 1 ≤ m1 ≤ 3, 11 ≤ c1 ≤ 13, and 0 < d1 ≤ 1.5.

According to an embodiment, in the composite solid ion conductor, the volume ratio of the solid ion conductor represented by Formula 1 to the solid ion conductor represented by Formula 2 may be about 97:3 to about 50:50.

According to an embodiment, the solid electrolyte may have a thickness of about 0.1 micrometer (µm) to about 30 µm.

According to another aspect of the disclosure, a method of manufacturing a solid ion conductor includes mechanically milling a lithium source, a boron source, an aluminum source, a Q element source, and a halogen source to provide a glassy solid ion conductor, and heat treating the glassy solid ion conductor at a temperature equal to or greater than an initial thermal decomposition temperature (Ts) as measured by differential scanning calorimeter (DSC) to provide a crystal-containing solid ion conductor represented by Formula 1

Formula 1 LiₐB_{b}AlₘQnO_{c}X_{d}

wherein, in Formula 1, Q is an element that has an ionic radius that differs from an ionic radius of Al by less than 30 % and has +3 and +5 valence states, X is at least one of F, Cl, Br, or I, 3.5 ≤ a ≤ 4.5, 3 ≤ b < 5.2, 1 ≤ m ≤ 3, 0 < n < 2, 11 ≤ c ≤ 13, and 0 < d ≤ 1.5.

According to an embodiment, the providing of the glassy solid ion conductor may further comprise, after mechanical milling, pre-heat treating at a temperature in a range of about 600 °C to about 1,300 °C and quenching.

According to an embodiment, the Q element source may include at least one of Sb₂O₃, Sb₂O₅, V₂O₃, V₂O₅, SbF₃, SbF₅, SbCl₃, SbCl₅, SbCl₂F₃, SbCl₃F₂, Sb(NO₃)₃, Sb(OH)₃, or Sb(OH)s.

According to an embodiment, the manufacturing of the crystal-containing solid ion conductor may include heat treating the glassy solid ion conductor under an air atmosphere, or disposing insulating films on both sides of the glassy solid ion conductor and then heat treating.

According to an embodiment, in the manufacturing of the crystal-containing solid ion conductor, the glassy solid ion conductor may be heat treated at a temperature of 600 °C or less for about 5 minutes to about 2 hours.

According to an embodiment, in the manufacturing of the crystal-containing solid ion conductor, insulating films may be arranged on both sides of the glassy solid ion conductor and heat treating may be performed at a pressure of about 1 megapascals (MPa) to about 50 MPa and a temperature of about 400 °C to about 600 °C.

According to another aspect of the disclosure, a lithium battery includes a cathode, an anode, and a solid electrolyte layer arranged between the cathode and the anode, wherein at least one of the cathode, the anode, or the solid electrolyte includes the solid electrolyte layer.

According to an embodiment, the lithium battery may be a lithium ion battery, an all-solid-state battery, or a multilayer ceramic (MLC) battery.

According to an embodiment, the lithium battery may include multiple cathodes each including a cathode current collector and a cathode active material layer arranged on both sides of the cathode current collector, multiple anodes each including an anode current collector and an anode active material layer arranged on both sides of the anode current collector, wherein the multiple anodes are alternately arranged between the multiple cathodes, and a solid electrolyte alternately arranged between the multiple cathodes and the multiple anodes, wherein at least one of the cathode active material layer or the anode active material layer includes the solid electrolyte.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a schematic cross-sectional view illustrating an embodiment of a multilayer ceramic (MLC) battery;
FIG. 2 is a schematic cross-sectional view illustrating an embodiment of an MLC battery;
FIG. 3 is a schematic cross-sectional view illustrating an embodiment of an MLC battery;
FIG. 4 is graph illustrating intensity (arbitrary units, a.u.) versus diffraction angle (degrees 2Θ) of an X-ray diffraction (XRD) spectrum for the glassy solid ion conductors of Comparative Example 1 and Examples 1 to 4, prior to heat treatment;
FIG. 5 is a graph illustrating intensity (a.u.) versus diffraction angle (degrees 2Θ) of an XRD spectrum for the crystal-containing ceramic solid ion conductors of Comparative Example 1 and Examples 1 to 4, after heat treatment;
FIG. 6 is a graph illustrating heat flow (a.u.) versus temperature (°C) of a differential scanning calorimetry (DSC) spectrum for the glassy solid ion conductors of Examples 1, 2, and 4;
FIGS. 7A to 7D are scanning electron micrographs (SEM) of fracture surfaces of the glassy solid ion conductor cullet of Examples 1 to 4, respectively, wherein the fractures are obtained by performing heat treatment at a temperature of 550 °C and a pressure of 50 MPa with a spacer as a blocking electrode on both sides of the cullet and then breaking a sintered material from the heat treatment with forceps;
FIG. 8 is a graph illustrating ionic conductivity (siemens per centimeter, S/cm) and ionic conductivity/electronic conductivity versus x of Li₄B_{5.2-x}Al_{1.8}SbₓO₁₂Cl as measured by electrochemical impedance spectroscopy by connecting wires to gold electrodes on both sides of a specimen, wherein the specimen is prepared by heat treating cullets of a glassy solid ion conductor of Example 2 at 550 °C in an air box furnace (hereinafter referred to as "box-sintering"); and

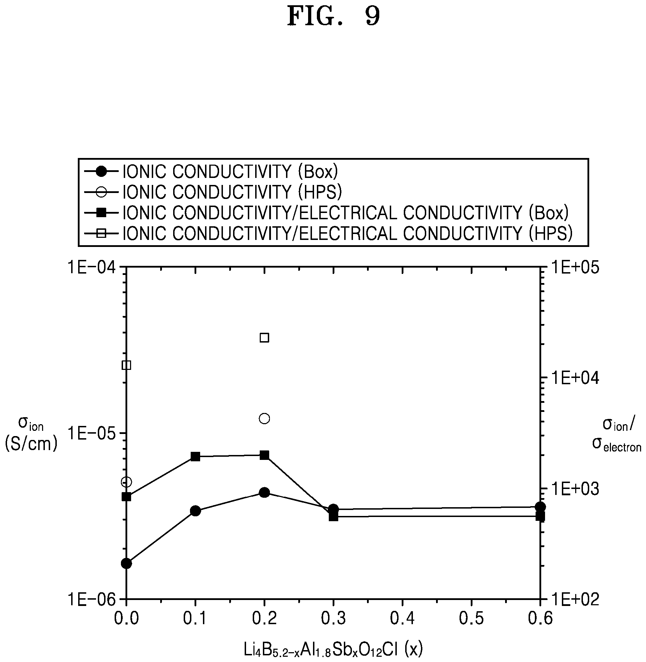

FIG. 9 is a graph illustrating ionic conductivity (siemens per centimeter, S/cm) and ionic conductivity/electronic conductivity versus x of Li₄B_{5.2-x}Al_{1.8}SbₓO₁₂Cl as measured by electrochemical impedance spectroscopy by connecting wires to gold electrodes on both sides of a specimen after preparing the specimen which is a box-sintered specimen of cullets of a glassy solid ion conductor of Example 2, and by connecting wires to spacers of blocking electrodes on both sides of the specimen, wherein the specimen is prepared by heat treating cullets of the same glassy solid ion conductor at a temperature of 550 °C and a pressure of 50 MPa with the spacers on both surfaces of blocking electrode (hereinafter referred to as "hot-press sintering" (HPS)).

### DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figure, to explain aspects. As used herein, the term "and/or" includes any and all combinations of one or more of the associated listed items. Expressions such as "at least one of," when preceding a list of elements, modify the entire list of elements and do not modify the individual elements of the list.

The present inventive concept described hereinbelow may have various modifications and various embodiments, example embodiments will be illustrated in the drawings and more fully described in the detailed description. The present inventive concept may, however, should not be construed as limited to the example embodiments set forth herein, and rather, should be understood as covering all modifications, equivalents, or alternatives falling within the scope of the present inventive concept.

The terms as used herein are for the purpose of describing particular embodiments only, and are not intended to be limiting the present inventive concept. An expression used in the singular encompasses the expression of the plural, unless it has a clearly different meaning in the context.

The expression "at least one" or "one or more" used in front of components in the present specification is meant to supplement a list of all components, and does not imply to supplement individual components of the description. The term "combination" used in the present specification includes, unless otherwise described, a mixture, an alloy, a reaction product, and the like. The term "include" used in the present specification does not exclude other components unless otherwise described, and means that other components may be further included. The terms such as "first," "second," etc. used in the present specification may be used to distinguish one component from another without indicating order, quantity, or importance. Unless otherwise indicated or otherwise clearly described by context in the present specification, components should be construed to include both the singular and the plural. The expression "or" includes, unless otherwise specified, the meaning of "and/or".

Throughout the present specification, the term "an embodiment" or the like means that a specific component described in connection with embodiments is included in at least one embodiment described herein, and that the specific component may or may not be present in other embodiments. In addition, components described herein should be construed as being possibly combined in any suitable manner in the various embodiments.

Unless otherwise stated, all percentages, parts, ratios, and the like are by weight. In addition, when an amount, concentration, or other values or parameters are given in a range, a preferable range, or a list of preferable upper limits or preferable lower limits, it is to be understood that, regardless of whether the range is separately disclosed, all ranges formed from any upper range limits, or preferred values and any lower range limits, or any pair of preferred values should be specifically disclosed.

When a range of numerical values is stated in the present specification, unless otherwise stated, the range is intended to include the endpoints and all integers and fractions within the range. The scope of the disclosure is intended not to be limited by specific values referred to when defining the range.

Unless otherwise specified, the unit "part by weight" refers to a weight ratio between each component, and the unit "part by mass" refers to a value obtained by converting a weight ratio between each component into a solid content.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The term "lower," can therefore, encompass both an orientation of "lower" and "upper," depending on the particular orientation of the figure. Similarly, if the device in one of the figures is turned over, elements described as "below" or "beneath" other elements would then be oriented "above" the other elements. The terms "below" or "beneath" can, therefore, encompass both an orientation of above and below.

The expression "about" used in the present specification includes a value stated herein, and also includes a value within an acceptable range of deviations of a specific value determined by those skilled in the art means in consideration of errors associated with corresponding measurement and measurement of specific quantity (i.e., the limit of the measuring system). For example, the expression "about" may include a value within one or more standard deviations, or a value ±30 %, ±20 %, ±10 %, or ±5 % of a specified value.

The term "amorphous or amorphous material" as used herein may refer to a material that lacks any long-range crystal structure as measured by X-ray diffraction.

The term "ceramic" as used herein may include amorphous materials, crystalline ceramics, glass-ceramics, and combinations thereof.

The term "glass(iness)" as used herein refers to an amorphous or non-crystalline material that exhibits a glass transition temperature.

The term "glass-ceramic" as used herein refers to a ceramic containing crystals formed by heat treating an amorphous material or a non-crystalline material.

The notation "T_{g}" as used herein refers to a glass transition temperature measured by a differential scanning calorimetry (DSC) experiment.

The notation "Tₛ" as used herein refers to an initial thermal decomposition temperature measured by a DSC experiment.

The notation "T_{c}" as used herein refers to a crystallization temperature measured by a DSC experiment.

Unless otherwise defined, all terms (including technical and scientific terms) used in the present specification have the same meaning as commonly understood by those skilled in the art to which the disclosure belongs to. In addition, terms such as terms defined in commonly used dictionaries should be interpreted to have meanings consistent with the meaning in the related art and the disclosure, and should not be construed as being idealized. Alternatively, the terms should not be interpreted in an excessively formal sense.

Exemplary embodiments are described with reference to cross-sectional views that are schematic diagrams of idealized embodiments. Accordingly, the appearance of examples may vary, for example, as a result of manufacturing techniques and/or tolerances. Therefore, embodiments described herein should not be construed as being limited to the specific shape of the regions described herein, but should include, for example, variations in shape occurring during manufacturing. For example, regions illustrated or described as flat regions may generally have rough and/or non-linear characteristics. Also, an illustrated acute angle may be round. Therefore, regions illustrated in drawings are schematic in nature, and shapes thereof are not intended to illustrate the precise shape of the regions and are not intended to limit the scope of the claims.

In general, an oxide solid electrolyte may be sintered simultaneously with a cathode to be applied to a lithium battery. However, such an oxide solid electrolyte generally has a high sintering temperature, which causes an interfacial reaction with a cathode active material, resulting in a sharp decrease in battery performance of a lithium battery. In addition, when an oxide solid electrolyte is used as a crystalline material, due to low binding force at the interface with a cathode active material, a detachment phenomenon occurs between the oxide solid electrolyte and the cathode active material.

A solid electrolyte of a new composition, a lithium battery containing the same, and a method of manufacturing the solid electrolyte are provided to address the aforementioned issues.

Hereinafter, a solid electrolyte, a lithium battery including the same, and a method of manufacturing the solid electrolyte will be described in more detail through exemplary embodiments.

### Solid electrolyte

A solid electrolyte according to an embodiment may include a solid ion conductor represented by Formula 1:

Formula 1 LiₐB_{b}AlₘQnO_{c}X_{d}

wherein, in Formula 1, Q may be an element that has an ionic radius that differs from an ionic radius of Al by less than 30 % and has +3 and +5 valence states, X may be at least one of F, Cl, Br, or I, 3.5 ≤ a ≤ 4.5, 3 ≤ b < 5.2, 1 ≤ m ≤ 3, 0 < n < 2, 11 ≤ c ≤ 13, and 0 < d ≤ 1.5.

In general, a solid ion conductor with a composition of Li₄B₇O₁₂Cl may be susceptible to moisture and have low ionic conductivity. A solid ion conductor with a composition of Li₄B₄Al₃O₁₂Cl in which Al is substituted in the B region of a composition of Li₄B₇O₁₂Cl may have excellent moisture resistance compared to a solid ion conductor with a composition of Li₄B₇O₁₂Cl, but may readily crystallize and may be difficult to vitrify due to the occurrence of devitrification during glass synthesis. As a result, it may be difficult to achieve acceptable adhesion between an electrode active material and a solid electrolyte including the solid ion conductor with a composition of Li₄B₄Al₃O₁₂Cl at temperatures below 600 °C.

The solid electrolyte according to an embodiment may contain a polyvalent atom in which Q in Formula 1 may be an element with +3 and +5 valence states. Q may also substitute for an Al element site where the difference in ionic radius from Al may create a vacancy defect. Such a substitutional vacancy defect may modify the reactivity of the solid electrolyte, and also affect the density and ionic conductivity of the solid electrolyte. The solid electrolyte according to an embodiment may have improved ionic conductivity due to increased vacancy defects through substantial doping of the Q element for an Al in Formula 1.

For example, Al, Sb, and V may have a coordination number of 6.

In the solid electrolyte according to an embodiment, the ionic radius of the Q element in Formula 1 may be about 50 picometers (pm) to about 100 pm, about 53 pm to about 95 pm, about 55 pm to about 90 pm, about 58 pm to about 85 pm, or about 58 pm to about 80 pm.

In the solid electrolyte according to an embodiment, Q in Formula 1 may include at least one of Sb or V.

In the solid electrolyte according to an embodiment, Q in Formula 1 may be a substitutional dopant that substitutes for at least one of a B or an Al in Formula 1. For example, since B and Al each have +3 valence electrons, Q, which may have +5 valence electrons, may substitute for B or Al. In the substituted region, vacancies (or vacant lattice points) may be created, as well as Schottky defects, a type of point defect. The solid electrolyte including Schottky defects created therein may be able to maintain the overall skeletal structure. However, as the lattice volume may vary, and the larger lattice volume may lead to the formation of channels with more suitable sizes for ion transport, thereby improving the ionic conductivity.

In the solid electrolyte according to an embodiment, X in Formula 1 may be at least one of F, Cl, Br, or I.

In the solid electrolyte according to an embodiment, a in Formula 1 may be 3.5 ≤ a ≤ 4.5, 3.6 ≤ a ≤ 4.4, 3.7 ≤ a ≤ 4.3, or 3.8 ≤ a ≤ 4.2.

In the solid electrolyte according to an embodiment, b in Formula 1 may be 3 ≤ b < 5.2, 3.2 ≤ b ≤ 5.1, 3.4 ≤ b ≤ 5.1, 3.6 ≤ b ≤ 5.1, 3.8 ≤ b ≤ 5.1, 3.9 ≤ b ≤ 5.1, or 4.1 ≤ b ≤ 5.1.

In the solid electrolyte according to an embodiment, m in Formula 1 may be 1 ≤ m ≤ 3, 1.2 ≤ m ≤ 3, 1.4 ≤ m ≤ 3, 1.6 ≤ m ≤ 3, or 1.8 ≤ m ≤ 3.

In the solid electrolyte according to an embodiment, n in Formula 1 may be 0 < n < 2, 0 < n < 1.8, 0 < n < 1.6, 0 < n < 1.4, 0 < n < 1.2, 0 < n < 1, 0 < n ≤ 0.8, or 0.1 ≤ n ≤ 0. When n in Formula 1 is within the ranges above, the generation of secondary phases, such as LiQOs, Li₄AlQO₆, and Q₂O₃, may be minimized as measured by X-ray diffraction analysis.

In the solid electrolyte according to an embodiment, the solid ion conductor may include Li₄B_{5.1}Al_{1.8}Sb_{0.1}O₁₂F, Li₄B₅Al_{1.8}Sb_{0.2}O₁₂F, Li₄B_{4.9}Al_{1.8}Sb_{0.3}O₁₂F, Li₄B_{4.8}Al_{1.8}Sb_{0.4}O₁₂F, Li₄B_{4.7}Al_{1.8}Sb_{0.5}O₁₂F, Li₄B_{4.6}Al_{1.8}Sb_{0.6}O₁₂F, Li₄B_{4.5}Al_{1.8}Sb_{0.7}O₁₂F, Li₄B_{4.4}Al_{1.8}Sb_{0.8}O₁₂F, or Li₄B_{4.3}Al_{1.8}Sb_{0.9}O₁₂F; Li₄B_{5.1}Al_{1.8}Sb_{0.1}O₁₂Cl, Li₄B₅Al_{1.8}Sb_{0.2}O₁₂Cl, Li₄B_{4.9}Al_{1.8}Sb_{0.3}O₁₂Cl, Li₄B_{4.8}Al_{1.8}Sb_{0.4}O₁₂Cl, Li₄B_{4.7}Al_{1.8}Sb_{0.5}O₁₂Cl, Li₄B_{4.6}Al_{1.8}Sb_{0.6}O₁₂Cl, Li₄B_{4.5}Al_{1.8}Sb_{0.7}O₁₂Cl, Li₄B_{4.4}Al_{1.8}Sb_{0.8}O₁₂Cl, Li₄B_{4.3}Al_{1.8}Sb_{0.9}O₁₂Cl; Li₄B_{5.1}Al_{1.8}Sb_{0.1}O₁₂Br, Li₄B₅Al_{1.8}Sb_{0.2}O₁₂Br, L₁₄B_{4.9}Al_{1.8}Sb_{0.3}O₁₂Br, L₁₄B_{4.8}Al_{1.8}Sb_{0.4}O₁₂Br, L₁₄B_{4.7}Al_{1.8}Sb_{0.5}O₁₂Br, Li₄B_{4.6}Al_{1.8}Sb_{0.6}O₁₂Br, Li₄B_{4.5}Al_{1.8}Sb_{0.7}O₁₂Br, Li₄B_{4.4}Al_{1.8}Sb_{0.8}O₁₂Br, Li₄B_{4.3}Al_{1.8}Sb_{0.9}O₁₂Br; Li₄B_{5.1}Al_{1.8}Sb_{0.1}O₁₂I, Li₄B₅Al_{1.8}Sb_{0.2}O₁₂I, Li₄B_{4.9}Al_{1.8}Sb_{0.3}O₁₂I, Li₄B_{4.8}Al_{1.8}Sb_{0.4}O₁₂I, Li₄B_{4.7}Al_{1.8}Sb_{0.5}O₁₂I, Li₄B_{4.6}Al_{1.8}Sb_{0.6}O₁₂I, Li₄B_{4.5}Al_{1.8}Sb_{0.7}O₁₂I, Li₄B_{4.4}Al_{1.8}Sb_{0.8}O₁₂I, Li₄B_{4.3}Al_{1.8}Sb_{0.9}O₁₂I; Li₄B_{5.1}Al_{1.8}V_{0.1}O₁₂F, Li₄B₅Al_{1.8}V_{0.2}O₁₂F, Li₄B_{4.9}Al_{1.8}V_{0.3}O₁₂F, Li₄B_{4.8}Al_{1.8}V_{0.4}O₁₂F, Li₄B_{4.7}Al_{1.8}V_{0.5}O₁₂F, Li₄B_{4.6}Al_{1.8}V_{0.6}O₁₂F, Li₄B_{4.5}Al_{1.8}V_{0.7}O₁₂F, Li₄B_{4.4}Al_{1.8}V_{0.8}O₁₂F, Li₄B_{4.3}Al_{1.8}V_{0.9}O₁₂F; Li₄B_{5.1}Al_{1.8}V_{0.1}O₁₂Cl, Li₄B₅Al_{1.8}V_{0.2}O₁₂Cl, Li₄B_{4.9}Al_{1.8}V_{0.3}O₁₂Cl, Li₄B_{4.8}Al_{1.8}V_{0.4}O₁₂Cl, Li₄B_{4.7}Al_{1.8}V_{0.5}O₁₂Cl, Li₄B_{4.6}Al_{1.8}V_{0.6}O₁₂Cl, Li₄B_{4.5}Al_{1.8}V_{0.7}O₁₂Cl, Li₄B_{4.4}Al_{1.8}V_{0.8}O₁₂Cl, Li₄B_{4.3}Al_{1.8}V_{0.9}O₁₂Cl; Li₄B_{5.1}Al_{1.8}V_{0.1}O₁₂Br, Li₄B₅Al_{1.8}V_{0.2}O₁₂Br, L₁₄B_{4.9}Al_{1.8}V_{0.3}O₁₂Br, L₁₄B_{4.8}Al_{1.8}V_{0.4}O₁₂Br, L₁₄B_{4.7}Al_{1.8}V_{0.5}O₁₂Br, Li₄B_{4.6}Al_{1.8}V_{0.6}O₁₂Br, Li₄B_{4.5}Al_{1.8}V_{0.7}O₁₂Br, Li₄B_{4.4}Al_{1.8}V_{0.8}O₁₂Br, Li₄B_{4.3}Al_{1.8}V_{0.9}O₁₂Br; Li₄B_{5.1}Al_{1.8}V_{0.1}O₁₂I, Li₄B₅Al_{1.8}V_{0.2}O₁₂I, Li₄B_{4.9}Al_{1.8}V_{0.3}O₁₂I, Li₄B_{4.8}Al_{1.8}V_{0.4}O₁₂I, Li₄B_{4.7}Al_{1.8}V_{0.5}O₁₂I, Li₄B_{4.6}Al_{1.8}V_{0.6}O₁₂I, Li₄B_{4.5}Al_{1.8}V_{0.7}O₁₂I, Li₄B_{4.4}Al_{1.8}V_{0.8}O₁₂I, or L₁₄B_{4.3}Al_{1.8}V_{0.9}O₁₂I. For example, the solid ion conductor may include Li₄B_{5.1}Al_{1.8}Sb_{0.1}O₁₂Cl, Li₄B₅Al_{1.8}Sb_{0.2}O₁₂Cl, Li₄B_{4.9}Al_{1.8}Sb_{0.3}O₁₂Cl, Li₄B_{4.8}Al_{1.8}Sb_{0.4}O₁₂Cl, Li₄B_{4.7}Al_{1.8}Sb_{0.5}O₁₂Cl, Li₄B_{4.6}Al_{1.8}Sb_{0.6}O₁₂Cl, Li₄B_{4.5}Al_{1.8}Sb_{0.7}O₁₂Cl, Li₄B_{4.4}Al_{1.8}Sb_{0.8}O₁₂Cl, Li₄B_{4.3}Al_{1.8}Sb_{0.9}O₁₂Cl; Li₄B_{5.1}Al_{1.8}V_{0.1}O₁₂Cl, Li₄B₅Al_{1.8}V_{0.2}O₁₂Cl, Li₄B_{4.9}Al_{1.8}V_{0.3}O₁₂Cl, Li₄B_{4.8}Al_{1.8}V_{0.4}O₁₂Cl, L₁₄B_{4.7}Al_{1.8}V_{0.5}O₁₂Cl, Li₄B_{4.6}Al_{1.8}V_{0.6}O₁₂Cl, Li₄B_{4.5}Al_{1.8}V_{0.7}O₁₂Cl, Li₄B_{4.4}Al_{1.8}V_{0.8}O₁₂Cl, or Li₄B_{4.3}Al_{1.8}V_{0.9}O₁₂Cl.

The solid ion conductor according to an embodiment may be glassy, crystalline, or a combination thereof.

According to an embodiment, the solid electrolyte may have a crystallization temperature (T_{c}) of about 400 °C to about 600 °C and a glass transition temperature (T_{g}) of about 400 °C to about 432 °C as measured by differential scanning calorimetry (DSC) of the glass-ceramic material. For example, the crystallization temperature T_{c} may be 450 °C or greater, 500 °C or greater, or 570 °C or less, or 550 °C or less.

The solid ion conductor according to an embodiment may have a density about 1.5 grams per cubic centimeter (g/cm³) to about 3.0 g/cm³ as measured by a gas pycnometer. For example, the density of the solid ion conductor may be 1.5 g/cm³ or greater, 1.8 g/cm³ or greater, 2.0 g/cm³ or greater, or 3.0 g/cm³ or less, 2.7 g/cm³ or less, or 2.5 g/cm³ or less. A gas pycnometer is a device that measures true density of powders, solids, and slurries. For descriptions of specific measurement methods, reference is provided below.

In the solid electrolyte according to an embodiment, the ionic conductivity of the solid ion conductor at 25 °C may be about 3.4 × 10⁻⁶ siemens per centimeter (Scm⁻¹) to about 5.0 × 10⁻⁶ Scm⁻¹, about 3.4 × 10⁻⁶ Scm⁻¹ to about 4.9 × 10⁻⁶ Scm⁻¹, about 3.4 × 10⁻⁶ Scm⁻¹ to about 4.8 × 10⁻⁶ Scm⁻¹, about 3.4 × 10⁻⁶ Scm⁻¹ to about 4.7 × 10⁻⁶ Scm⁻¹, about 3.4 × 10⁻⁶ Scm⁻¹ to about 4.6 × 10⁻⁶ Scm⁻¹, about 3.4 × 10⁻⁶ Scm⁻¹ to about 4.5 × 10⁻⁶ Scm⁻¹, or about 3.4 × 10⁻⁶ Scm⁻¹ to about 4.4 × 10⁻⁶ Scm⁻¹.

The solid electrolyte according to an embodiment may further include a composite solid ion conductor that further includes a crystalline solid ion conductor represented by 2:

Formula 2 Lia1 B_{b1}Alₘ₁O_{c1}X_{d1}

wherein, in Formula 2, X may be at least one of F, Cl, Br, or I, 3.5 ≤ a1 ≤ 4.5, 3 ≤ b1 < 5.2, 1 ≤ m1 ≤ 3, 11 ≤ c1 ≤ 13, and 0 < d1 ≤ 1.5.

By further including the crystalline solid ion conductor represented by Formula 2, the solid electrolyte according to an embodiment may include a composite solid ion conductor including the solid ion conductor represented by Formula 1 with a glassy or amorphous structure at room temperature (25 °C) and the solid ion conductor represented by Formula 2 with a crystalline structure, thereby improving the adhesion between the solid electrolyte and an electrode active material. In addition, the solid electrolyte including such a composite solid ion conductor may have a smaller pore size after secondary heat treatment which will be described later, and accordingly, may have further improved ionic conductivity.

In the solid electrolyte according to an embodiment, the volume ratio of the solid ion conductor represented by Formula 1 to the solid ion conductor represented by Formula 2 in the composite solid ion conductor may be about 97:3 to about 50:50. When the volume ratio of the solid ion conductor represented by Formula 1 to the solid ion conductor represented by Formula 2 is within the range above, the solid electrolyte including the same may have a smaller pore size after heat treatment which will be described later, thereby maximizing the ionic conductivity.

The solid electrolyte according to an embodiment may have a thickness of about 0.1 micrometer (µm) to about 30 µm. The thickness of the solid electrolyte may be appropriately adjusted to satisfy a desired density and a desired ionic conductivity within the ranges above.

### Method for manufacturing solid electrolyte

A method of manufacturing a solid electrolyte according to another embodiment includes mechanically milling a lithium source, a boron source, an aluminum source, a Q element source, and a halogen source to provide a glass solid ion conductor; and heat treating the glassy solid ion conductor at a temperature equal to or greater than an initial thermal decomposition temperature (Ts) as measured by differential scanning calorimetry (DSC) to provide a crystal-containing solid ion conductor represented by Formula 1

Formula 1 LiₐB_{b}AlₘQnO_{c}X_{d}

wherein, in Formula 1, Q may be an element that has an ionic radius that differs from an ionic radius of Al by less than 30 % and has +3 and +5 valence states, X may be at least one of F, Cl, Br, or I, 3.5 ≤ a ≤ 4.5, 3 ≤ b < 5.2, 1 ≤ m ≤ 3, 0 < n < 2, 11 ≤ c ≤ 13, and 0 < d ≤ 1.5.

A solid electrolyte manufactured by the method of manufacturing a solid electrolyte may implement high density and high ionic conductivity at a low sintering temperature.

First, by mechanically milling the lithium source, the boron source, the aluminum source, the Q element source, and the halogen source, a milled mixture may be prepared. The lithium source, the boron source, the aluminum source, the Q element source, and the halogen source may each include chlorides, halides, oxides, nitrides, oxynitrides, nitrates, hydroxides, and carbonates of the lithium, boron, aluminum, or Q element. Examples of the lithium source include Li₂CO₃, LiOH, etc. Examples of the boron source include B₂O₃etc. Examples of the aluminum source may include Al₂O₃, Al(OH)₃, etc. The Q element source may be, for example, at least one of a Sb source or a V source. Examples of a Sb source include Sb₂O₃, Sb₂O₃, SbF₃, SbFs, SbCl₃, SbCl₅, SbCl₂F₃, SbCl₃F₂, Sb(NO₃)₃, Sb(OH)₃, Sb(OH)₅, etc. Examples of a V source include V₂O₃, V₂O₅, etc. Examples of the halogen source include LiCI, etc. The lithium source, the boron source, the aluminum source, the Q element source, and the halogen source may be added to a reactor in a stoichiometric ratio according to a composition of a solid ion conductor to be obtained, and then mechanical milling may be performed thereon. Mechanical milling may be performed by methods such as ball milling, high-energy ball milling, mechanofusion milling, etc. For example, high-energy ball milling may be performed dry in an inert atmosphere for about 0.5 hours to about 1,000 hours, about 0.5 hours to about 100 hours, or about 10 hours to about 30 hours. For example, high-energy ball milling may be performed dry in an inert atmosphere at a speed of about 300 revolutions per minute (rpm) to about 10,000 rpm, about 350 rpm to about 5,000 rpm, or about 370 rpm to about 1,000 rpm. High energy ball milling may be performed for about 0.5 hours to about 150 hours, about 1 hour to about 100 hours, or about 3 hours to about 50 hours. In such a high-energy ball milling process, the temperature may rise to 200 °C during ball milling, and the pressure may be on the order of 6 gigapascals (GPa) during ball milling. For example, the PULVERISETTE 7 premium line may be used. A particle diameter of the mixture ground by the mechanical milling may be, for example, about 0.1 µm to about 10 µm or about 0.1 µm to about 5 µm.

Next, the milled mixture may be pre-heat treated at a temperature of about 600 °C to about 1,300 °C for about 1 hour to about 36 hours, and then quenched to prepare a glassy solid ion conductor. For example, the temperature at which the pre-heat treatment is performed may be 650 °C or greater, 700 °C or greater, 750 °C or greater, 1,250 °C or less, 1,200 °C or less, or 1,150 °C or less. For example, the duration for which the pre-heat treatment is performed may be about 2 hours to about 30 hours or about 3 hours to about 20 hours. The pre-heat treatment may be performed by adding the milled mixture into a jar and heat-treating it at a heating rate of about 1 degree Celsius per minute (°C/min) to about 20 °C/min or about 5 °C/min to about 15 °C/min. Alternatively, the milled mixture may be added into an induction heating stirrer and heat-treated at a high frequency, such as 1 kilowatts (kW) to 5 kW, until it changes to a different color. Afterwards, the melt may be dropped between two rollers and quenched in a cooling time of 1 second to a temperature of 200 °C or less to manufacture a glassy solid ion conductor. Here, printing of the glassy solid ion conductor may be performed by using a screen printing method or the like.

Next, a crystal-containing solid ion conductor represented by Formula 1 may be prepared by heat treating the glassy solid ion conductor at a temperature equal to or greater than an initial thermal decomposition temperature (Tₛ) as measured by differential scanning calorimetry:

Formula 1 LiₐB_{b}AlₘQnO_{c}X_{d}

wherein, in Formula 1, Q may be an element that has an ionic radius that differs from an ionic radius of Al by less than 30 % and has +3 and +5 valence states, X may be at least one of F, Cl, Br, or I, 3.5 ≤ a ≤ 4.5, 3 ≤ b < 5.2, 1 ≤ m ≤ 3, 0 < n < 2, 11 ≤ c ≤ 13, and 0 < d ≤ 1.5.

The initial thermal decomposition temperature Tₛ may be, for example, about 500 °C to about 530 °C. The manufacturing of the crystal-containing solid ion conductor may include heat treating the glassy solid ion conductor under an air atmosphere, or disposing insulating films on both sides of the glassy solid ion conductor and then heat treating.

For example, in the method of manufacturing a solid ion conductor, the glassy solid ion conductor may be heat treated at a temperature of 600 °C or less for about 5 minutes to about 2 hours. The temperature at which the heat treatment is performed may be, for example, 400 °C or greater, 450 °C or greater, 500 °C or greater, 570 °C or less, or 550 °C or less. In the manufacturing of the crystal-containing solid ion conductor, insulating films may be arranged on both sides of the glassy solid ion conductor, and heat treatment may be performed thereon at a pressure of about 1 MPa to about 50 MPa and a temperature of about 400 °C to about 600 °C. The insulating film may use a blocking electrode such as a spacer. The heat treatment using the insulating film may eliminate the surface resistance when crystallizing the glassy solid ion conductor, and may produce a ceramic solid ion conductor containing dense crystals. The resulting solid ion conductor containing the crystals may have higher ionic conductivity.

### Lithium battery

A lithium battery according to another aspect may include a cathode, an anode, and a solid electrolyte layer arranged between the cathode and the anode, wherein at least one of the cathode, the anode, or the solid electrolyte layer includes the solid electrolyte.

The lithium battery according to an embodiment may be a lithium ion battery, an all-solid-state battery, or a multilayer ceramic (MLC) battery.

### Lithium ion battery

For example, a lithium ion battery may include a cathode, an anode, and a liquid electrolyte arranged between the cathode and the anode, wherein a protective layer including the solid ion conductor represented by Formula 1 may be arranged on one side of at least one of the cathode and the anode.

For example, a lithium ion battery may include a cathode active material layer, and the cathode active material layer may include a composite cathode active material including: a core including a cathode active material; and a first coating layer arranged on the core, wherein the first coating layer may include the solid ion conductor represented by Formula 1.

For example, a lithium ion battery may include an anode active material layer, and the anode active material layer may include a composite anode active material including: a core including an anode active material; and a second coating layer arranged on the core, wherein the second coating layer may include the solid ion conductor represented by Formula 1.

For example, a lithium ion battery may be manufactured as follows.

First, a cathode may be prepared. A cathode active material, a conductive material, a binder, and a solvent may be mixed to prepare a composition for forming a cathode active material layer. In an embodiment, the composition for forming a cathode active material layer may be directly applied on a cathode current collector and dried to prepare a cathode. In one or more embodiments, the composition for forming a cathode active material layer may be cast on a separate support, and then a film obtained by peeling off from the support may be laminated on a cathode current collector to prepare a cathode. In one or more embodiments, the composition for forming a cathode active material layer may be prepared in the form of an electrode ink containing an excess of solvent, and the electrode ink may be printed on a support by an inkjet method or a gravure printing method to prepare a cathode. A printing method is not limited to the above-described method, and any method available for general coating and printing may be used.

On one surface of the cathode active material layer included in the cathode, a solid electrolyte including the solid ion conductor represented by Formula 1 may be applied to form a cathode protective layer. Alternatively, solid electrolyte particles containing the solid ion conductor represented by Formula 1 may be added to the composition for forming a cathode active material layer, and thus may be included in a cathode active material layer.

The cathode current collector may include a metal substrate. For use as the metal substrate, for example, a plate or a foil, formed of aluminum (Al), indium (In), copper (Cu), magnesium (Mg), stainless steel, titanium (Ti), iron (Fe), cobalt (Co), nickel (Ni), zinc (Zn), germanium (Ge), lithium (Li), or an alloy thereof, may be used. The cathode current collector may be omitted. The cathode current collector may further include a carbon layer arranged on one side or both sides of the metal substrate. When the carbon layer is additionally arranged on the metal substrate, a metal of the metal substrate may be prevented from corrosion by the solid electrolyte included in the cathode, and may reduce the interfacial resistance between the cathode active material layer and the cathode current collector. A thickness of the carbon layer may be, for example, about 0.1 µm to about 5 µm, about 0.1 µm to about 3 µm, or about 0.1 µm to about 1 µm. When the carbon layer is too thin, the contact between the metal substrate and the solid electrolyte may not be completely blocked. When the carbon layer is too thick, the energy density of the lithium ion battery may be reduced. The carbon layer may include amorphous carbon, crystalline carbon, or the like.

For use as the cathode active material, any material generally used for a lithium battery in the art may be used without limitation. For example, lithium transition metal oxide, transition metal sulfide, or the like may be used. For example, the cathode active material may include at least one composite oxide of lithium and a metal selected from cobalt, manganese, nickel, or a combination thereof, and examples thereof may include a compound represented by at least one of the following formulae: LiₐA'_{1-b}B'_{b}D'₂ (where 0.90 ≤ a ≤ 1.8 and 0 ≤ b ≤ 0.5); LiₐE'_{1-b}B'_{b}O_{2-c}D'_{c} (where 0.90 ≤ a ≤ 1.8, 0 ≤ b ≤ 0.5, and c ≤ 0.05); LiE'_{2-b}B'_{b}O_{4-c}D'_{c} (where 0 ≤ b ≤ 0.5 0 ≤ c ≤ 0.05); LiₐNi_{1-b-c}Co_{b}B'_{c}D'_{α} (where 0.90 ≤ a ≤ 1.8, 0 ≤ b ≤ 0.5, 0 ≤ c ≤ 0.05, and 0 < α ≤ 2); LiₐNi_{1-b-c}Co_{b}B'_{c}O_{2-α}F'_{α} (where 0.90 ≤ a ≤ 1.8, 0 ≤ b ≤ 0.5, 0 ≤ c ≤ 0.05, and 0 < α < 2); LiₐNi_{1-b-c}Co_{b}B'_{c}O_{2-α}F'₂ (where 0.90 ≤ a ≤ 1.8, 0 ≤ b ≤ 0.5, 0 ≤ c ≤ 0.05, and 0 < α < 2); LiₐNi_{1-b-c}Mn_{b}B'_{c}D'_{α} (where 0.90 ≤ a ≤ 1.8, 0 ≤ b ≤ 0.5, 0 ≤ c ≤ 0.05, and 0 < α ≤ 2); LiₐNi_{1-b-c}Mn_{b}B'_{c}O_{2-α}F'_{α} (where 0.90 ≤ a ≤ 1.8, 0 ≤ b ≤ 0.5, 0 ≤ c ≤ 0.05, and 0 < α < 2); LiₐNi_{1-b-c}Mn_{b}B'_{c}O_{2-α}F'₂ (where 0.90 ≤ a ≤ 1.8, 0 ≤ b ≤ 0.5, 0 ≤ c ≤ 0.05, and 0 < α < 2); LiₐNi_{b}E'_{c}G'_{d}O₂ (where 0.90 ≤ a ≤ 1.8, 0 ≤ b ≤ 0.9, 0 ≤ c ≤ 0.5, and 0.001 ≤ d ≤ 0.1); LiₐNi_{b}Co_{c}Mn_{d}G'ₑO₂ (where 0.90 ≤ a ≤ 1.8, 0 ≤ b ≤ 0.9, 0 ≤ c ≤ 0.5, 0 ≤ d ≤0.5, and 0.001 ≤ e ≤ 0.1); LiₐNiG'_{b}O₂ (where 0.90 ≤ a ≤ 1.8 and 0.001 ≤ b ≤ 0.1); LiₐCoG'_{b}O₂ (where 0.90 ≤ a ≤ 1.8 and 0.001 ≤ b ≤ 0.1); LiₐMnG'_{b}O₂ (where 0.90 ≤ a ≤ 1.8 and 0.001 ≤ b ≤ 0.1); LiₐMn₂G'_{b}O₄ (where 0.90 ≤ a ≤ 1.8 and 0.001 ≤ b ≤ 0.1); Q'O₂; Q'S₂; LiQ'S₂; V₂O₅; LiV₂O₂; LiI'O₂; LiNiVO₄; Li_{(3-f)}J'₂(PO₄)₃ (where 0 ≤ f ≤ 2); Li_{(3-f)}Fe₂(PO₄)₃ (where 0 ≤ f ≤ 2); or LiFePO_{4.} In the formulae above, A' may be Ni, Co, Mn, or a combination thereof; B' may be Al, Ni, Co, Mn, Cr, Fe, Mg, Sr, V, a rare earth element, or a combination thereof; D' may be O, F, S, P, or a combination thereof; E' may be Co, Mn, or a combination thereof; F' may be F, S, P, or a combination thereof; G' may be Al, Cr, Mn, Fe, Mg, La, Ce, Sr, V, or a combination thereof; Q' may be Ti, Mo, Mn, or a combination thereof; I' may be Cr, V, Fe, Sc, Y, or a combination thereof; and J' may be V, Cr, Mn, Co, Ni, Cu, or a combination thereof. For example, the cathode active material may be LiCoO₂, LiMnₓO₂ₓ (where x is 1 and 2), LiNi₁₋ₓMnₓO₂ₓ (where 0<x<1), Ni_{1-x-y}CoₓMn_{y}O₂ (where 0≤x≤0.5 and 0≤y≤0.5), LiFePO₄, TiS₂, FeS₂, TiS₃, FeS₃, or the like. A conductive composition may be applied on the surface of the cathode active material to suppress side reactions between the cathode active material and an electrolyte solution.

The conductive material may include, for example, carbon black, carbon fiber, graphite, or a combination thereof. The carbon black may be, for example, acetylene black, ketjen black, Super P carbon, channel black, furnace black, lamp black, thermal black, or a combination thereof. The graphite may be natural graphite or artificial graphite. A combination including at least two of the foregoing materials may be used. The cathode may further include, in addition to such a carbonaceous conductive material, an additional conductive material. Such an additional conductive material may include: electrically conductive fibers such as metal fibers; carbon fluoride powder; metal powder such as aluminum powder, or nickel powder; conductive whisker such as zinc oxide or potassium titanate; or a polyethylene derivative. A combination including at least two of the aforementioned additional conductive materials may be used. An amount of the conductive material may be, based on 100 parts by weight of the cathode active material, about 1 part by weight to about 10 parts by weight, for example, about 2 parts by weight to about 7 parts by weight. When the amount of the conductive material is within the ranges above, for example, about 1 part by weight to about 10 parts by weight, the cathode may have appropriate electrical conductivity.

A binder may improve adhesion of components of the cathode with one another and with a current collector of the cathode. Examples of the binder include polyacrylic acid (PAA), polyvinylidene fluoride, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylenepropylene-diene monomer (EPDM), sulfonated EPDM, styrene-butadiene-rubber, fluorinated rubber, a copolymer thereof, or a combination thereof. An amount of the binder may be, based on 100 parts by weight of the cathode active material, about 1 part by weight to about 10 parts by weight, for example, about 2 parts by weight to about 7 parts by weight. When the amount of the binder is within the ranges above, the adhesion to the cathode current collector of the cathode active material layer may be further improved, and reduction in the energy density of the cathode active material layer may be suppressed.

For use as a solvent, N-methyl pyrrolidone, acetone, water, or the like may be used. The amounts of the cathode active material, the conductive material, the binder, and the solvent may be at levels suitable for use in a lithium battery.

A plasticizer may be added to the cathode active material composition to form pores in the cathode active material layer.

Next, an anode may be prepared. An anode active material, a conductive material, a binder, and a solvent may be mixed to prepare a composition for forming an anode active material layer. In an embodiment, the composition for forming an anode active material may be directly applied on a copper current collector and dried to prepare an anode. In one or more embodiments, the composition for forming an anode active material may be cast on a separate support, and then an anode active material film obtained by peeling off from the support may be laminated on a copper current collector to prepare an anode. In one or more embodiments, the composition for forming an anode active material layer may be prepared in the form of an electrode ink containing an excess of solvent, and the electrode ink may be printed on a support by an inkjet method or a gravure printing method to prepare an anode. A printing method is not limited to the aforementioned method, and any method available for general coating and printing may be used.

For example, the anode active material may include at least one of a lithium metal, a lithium metal alloy, a metal alloyable with lithium, a transition metal oxide, a non-transition metal oxide, or a carbon-containing material. The lithium metal alloy refers to an alloy of lithium and other metals such as indium. Examples of the metal alloyable with lithium include Si, Sn, Al, Ge, Pb, Bi, Sb, a Si-Y' alloy (where Y' is an alkali metal, an alkaline earth metal, a Group 13 element, a Group 14 element, a Group 15 element, a Group 16 element, a transition metal, a rare earth element, or a combination thereof, but is not Si), a Sn-Y' alloy (where Y' is an alkali metal, an alkaline earth metal, a Group 13 element, a Group 14 element, a Group 15 element, a Group 16 element, a transition metal, a rare earth element, or a combination thereof, but is not Sn), or the like. The element Y' may be, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, or a combination thereof. The transition metal oxide may include, for example, a lithium titanium oxide, a vanadium oxide, a lithium vanadium oxide, or the like. The non-transition metal oxide may include, for example, SnO₂, SiOx (where 0<x<2), or the like. The carbon-containing material may include, for example, crystalline carbon, amorphous carbon, or a mixture thereof. The crystalline carbon may be graphite, such as natural graphite or artificial graphite, that is non-shaped or in a plate, flake, spherical, or fiber form. The amorphous carbon may include soft carbon (low-temperature calcined carbon), hard carbon, mesophase pitch carbide, calcined coke, or the like. For example, the anode active material may include a lithium metal, a lithium metal alloy, or a combination thereof.

A conductive material, a binder, and a solvent that are used for manufacturing the anode may be selected from materials used for manufacturing the cathode in the form of a plate. Amounts of the anode active material, the conductive material, the binder, and the solvent may be at levels generally used in a lithium battery.

A plasticizer may be added to the composition for forming an anode active material to form pores in the anode active material layer.

A protective layer including a solid electrolyte including the solid ion conductor represented by Formula 1 may be arranged on one side of the anode active material layer. In one or more embodiments, the anode active material may include an anode active material particle which includes: a core including a lithium metal, a lithium metal alloy, or a combination thereof; and a first coating layer arranged on the core, wherein the first coating layer may include a solid electrolyte including the solid ion conductor represented by Formula 1. When such a protective layer and/or a coating layer is arranged on the anode, the lithium ionic conductivity and/or stability to lithium metal of the anode may be improved. Alternatively, solid electrolyte particles containing the solid ion conductor represented by Formula 1 may be added to the composition for forming an anode active material layer, and thus may be included in an anode active material layer.

Next, a separator may be prepared.

The cathode and the anode may be separated by a separator, and any separator generally used in a lithium battery in the art may be used. A separator with a low resistance to movement of ions in an electrolyte and with excellent electrolyte wettability may be suitable. For example, the separator may be a material selected from glass fiber, polyester, Teflon, polyethylene, polypropylene, polytetrafluoroethylene (PTFE), or a combination thereof, and may be in any form of a non-woven fabric or a woven fabric. More particularly, a rollable separator including polyethylene, polypropylene, or the like may be used for a lithium ion battery, and a separator with excellent impregnation for an organic electrolyte solution may be used for a lithium ion polymer battery.

The separator may be manufactured as follows. A polymer resin, a filler, and a solvent may be mixed to prepare a separator composition. In an embodiment, the separator composition may be directly applied on an electrode and dried to form a separator film. In one or more embodiments, the separator composition may be cast on a separate support and dried. A separator film obtained by peeling off from the support, and then may be laminated on an electrode to form the separator. The polymer resin is not particularly limited, and any material available as a binder for an electrode plate may be used. For example, a vinylidene fluoride/hexafluoropropylene copolymer, polyvinylidene fluoride, polyacrylonitrile, polymethylmethacrylate, or a mixture thereof may be used as the polymer resin. For example, use of a vinylidene fluoride/hexafluoropropylene copolymer including hexafluoropropylene in an amount of about 8 weight percent (wt%) to about 25 wt% may be suitable.

The separator may further include a solid electrolyte including the solid ion conductor represented by Formula 1. For example, a coating layer including a solid electrolyte including the solid ion conductor represented by Formula 1 may be added on at least one side of the separator. When the separator additionally includes the coating layer, the heat resistance and dimensional stability of the separator may be further improved. For example, the separator may include: a porous substrate; and a coating layer arranged on one side or both sides of the porous substrate, wherein the coating layer may include a solid electrolyte including the solid ion conductor represented by Formula 1.

Next, a liquid electrolyte may be prepared.

The liquid electrolyte may be an organic electrolyte solution containing an organic solvent. The organic electrolyte solution may be prepared by dissolving a lithium salt in an organic solvent. For use as the organic solvent, any organic solvent available in the art may be used. For use as the lithium salt, any lithium salt available in the art may be used. An amount of lithium salt may be about 0.1 moles per liter (M) to about 10 M or about 0.1 M to about 5 M, but is not limited thereto. The amount may be appropriately changed within a range that may provide improved battery performance. The liquid electrolyte may additionally include, for example, a flame retardant such as a phosphorus-based flame retardant or a halogen-based flame retardant.

In the lithium ion battery according to an embodiment, the cathode, the anode, and the separator may be wound or folded to form a battery structure. The formed battery structure may be accommodated in a battery case. The lithium ion battery may include electrode tabs serving as an electrical path for inducing a current formed in the battery structure to the outside. A composition for forming an electrolyte may be injected into the battery case and cross-linked, or a solid electrolyte may be arranged, and the battery case may be then sealed to complete the manufacture of a lithium ion battery. The battery case is not limited, but may be, for example, a cylindrical type, a square type, a thin-film type, and the like.

The lithium ion battery according to another embodiment may be a pouch-type lithium ion battery using a pouch as a case for the lithium ion battery. The pouch-type lithium ion battery may include at least one battery structure. The separator may be arranged between the cathode and the anode to form a battery structure. A plurality of battery structures may be stacked in the thickness direction, impregnated with the organic electrolyte solution, accommodated in a pouch, and then sealed to complete the manufacture of a pouch-type lithium battery. For example, although not shown in the drawings, the cathode, the anode, and the separator may be simply stacked and accommodated in a pouch in the form of an electrode assembly, or may be wound or folded into an electrode assembly in the form of a jelly roll to be then accommodated in a pouch. Subsequently, a composition for forming an electrolyte may be injected into a pouch and cross-linked, or a solid electrolyte may be arranged, and the pouch may be then sealed to complete the manufacture of a lithium ion battery.

The lithium ion battery may have excellent characteristics in terms of discharge capacity and lifespan and high energy density, and thus may be, for example, used in an electric vehicle (EV). For example, the lithium metal battery may be used in a hybrid vehicle, such as a plug-in hybrid electric vehicle (PHEV) or the like. The lithium metal battery may also be applicable to the fields requiring high-power storage. For example, the lithium ion battery may be used in an electric bicycle, a power tool, or the like.

Multiple lithium ion batteries may be stacked to form a battery module, and multiple battery modules may form a battery pack. The battery pack may be used in a device that requires high capacity and large output. For example, the battery pack may be used in a laptop computer, a smart phone, an electronic vehicle, or the like. The battery module may include, for example, multiple batteries and a frame that holds the multiple batteries. For example, the battery pack may include multiple battery modules and a bus bar that connects the battery modules together. The battery module and/or the battery pack may further include a cooling device. The multiple battery packs may be managed by a battery management system. The battery management system may include a battery pack and an electronic control device connected to the battery pack.

### All-solid-state battery

An all-solid-state battery may be a battery including a solid electrolyte. The all-solid-state battery according to an embodiment may include a solid electrolyte including the solid ion conductor represented by Formula 1.

The all-solid-state battery may include: a cathode including a cathode active material; an anode including an anode active material; and a solid electrolyte arranged between the cathode and the anode, wherein at least one of the cathode or the anode may include a solid electrolyte including the electrolyte represented by Formula 1. For example, the all-solid-state battery may include a cathode active material layer, and the cathode active material layer may include a solid electrolyte including the solid ion conductor represented by Formula 1. For example, the all-solid-state battery may include an anode active material layer, and the anode active material layer may include a solid electrolyte including the solid ion conductor represented by Formula 1. The all-solid-state battery may include a solid electrolyte arranged between the cathode and the anode, and the solid electrolyte may include the electrolyte represented by Formula 1. For example, the all-solid-state battery may include a cathode active material layer, and the cathode active material layer may include a composite cathode active material including: a core including a cathode active material; and a first coating layer arranged on the core, wherein the first coating layer may include the solid ion conductor represented by Formula 1. For example, the all-solid-state battery may include an anode active material layer, and the anode active material layer may include a composite anode active material including: a core including an anode active material; and a second coating layer arranged on the core, wherein the second coating layer may include the solid ion conductor represented by Formula 1.

The all-solid-state battery may be an all-solid-state battery employing a non-precipitated anode or an all-solid-state battery employing a precipitated anode.

In the all-solid-state battery employing a non-precipitated anode, the initial charging capacity of the anode active material layer during initial charging may be, for example, greater than 50 %, 60 % or greater, 70 % or greater, 80 % or greater, 90 % or greater, or 100 % or greater, of the initial charging capacity of the cathode active material layer. In the all-solid-state battery employing a precipitated anode, the initial charging capacity of the anode active material layer during initial charging may be, for example, 50 % or less, 40 % or less, 30 % or less, 20 % or less, 10 % or less, 5 % or less, or 1% or less, of the initial charging capacity of the cathode active material layer.

The all-solid-state battery employing a non-precipitated anode may be prepared as follows.

First, a solid electrolyte may be prepared. For example, the solid electrolyte may be prepared by mixing a solid electrolyte including the solid ion conductor represented by Formula 1 and a binder and drying the mixture, or by pressing solid electrolyte powder containing the solid ion conductor represented by Formula 1 into a certain shape. For example, the solid electrolyte may be prepared by mixing a solid electrolyte including the solid ion conductor represented by Formula 1, a sulfide and/or an oxide solid electrolyte, and a binder and drying the mixture, or by pressing solid electrolyte powder containing the solid ion conductor represented by Formula 1 and sulfide solid electrolyte powder and/or oxide solid electrolyte powder into a certain shape. For example, the solid electrolyte may be prepared by mixing a sulfide solid electrolyte and/or an oxide solid electrolyte and a binder and drying the mixture, or by pressing sulfide solid electrolyte powder and/or oxide solid electrolyte powder into a certain shape.

For example, the solid electrolyte may be deposited by using a film-forming method, such as blasting, aerosol deposition, cold spraying, sputtering, chemical vapor deposition (CVD), spraying, etc., and a solid electrolyte layer may be prepared thereby. In addition, a solid electrolyte layer may be formed by pressurization. In addition, a solid electrolyte layer may be prepared by mixing a solid electrolyte, a solvent, and a binder or a support and pressing the mixture. In this case, a solvent or a support may be added to reinforce the strength of the solid electrolyte or to prevent short-circuiting of the solid electrolyte.

For example, a binder included in the solid electrolyte layer may include styrene butadiene rubber (SBR), polytetrafluoroethylene, polyvinylidene fluoride, polyethylene, polyvinyl alcohol, or the like, but is not limited thereto. Any material available as a binder in the art may be used. The binder of the solid electrolyte may be the same as or different from the binder of the anode and cathode.

The solid electrolyte may further include an oxide solid electrolyte, in addition to a solid electrolyte including the solid ion conductor represented by Formula 1. The oxide-based solid electrolyte may include at least one selected from Li_{1+x+y}AlₓTi₂₋ₓSi_{y}P_{3-y}O₁₂ (where 0<x<2 and 0≤y<3), BaTiOs, Pb(ZrₐTi₁₋ₐ)O₃ (PZT, where 0≤a≤1), Pb₁₋ₓLaₓZr_{1-y} Ti_{y}O₃ (PLZT) (where 0≤x<1 and 0≤y<1), Pb(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (where 0<x<2 and 0<y<3), LiₓAl_{y}Ti_{z}(PO₄)₃ (where 0<x<2, 0<y<1, and 0<z<3), Li_{1+x+y}(AlₐGa₁₋ₐ)ₓ(Ti_{b}Ge_{1-b})₂₋ₓSi_{y}P_{3-y}O₁₂ (where 0≤x≤1, 0≤y≤1, 0≤a≤1, and 0≤b≤1), LiₓLa_{y}TiO₃ (where 0<x<2 and 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (where M is Te, Nb, or Zr, and x is an integer from 1 to 10).

The solid electrolyte may further include a sulfide solid electrolyte in addition to the solid electrolyte including the solid ion conductor represented by Formula 1.

Non-limiting examples of the sulfide solid electrolyte material include Li₂S-P₂S₅; Li₂S-P₂S₅-LiX (where X is a halogen element, e.g., F, Cl, Br, or I); Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li₂S-SiS₂-B₂S₃-Lil; Li₂S-SiS₂-P₂S₅-LiI; Li₂S-B₂S₃; Li₂S-P₂S₅-ZₘSₙ (where m and n are each a positive number, and Z is Ge, Zn, or Ga); Li₂S-GeS₂; Li₂S-SiS₂-Li₃PO₄; and Li₂S-SiS₂-LiₚMO_{q} (where p and q are each a positive number, and M is P, Si, Ge, B, Al, Ga, or In). The sulfide solid electrolyte material may be prepared by treating a raw starting material of the sulfide solid electrolyte material (e.g., Li₂S, P₂S₅, etc.) by a melt quenching method, a mechanical milling method, or the like. In addition, a calcination process may be performed after the treatment.

Alternatively, an example of a sulfide solid electrolyte may be a compound having an argyrodite crystal structure. The compound having an argyrodite crystal structure may include at least one of Li₇₋ₓPS₆₋ₓClₓ (where 0<x<2), Li₇₋ₓPS₆₋ₓBrₓ (where 0<x<2), or Li₇₋ₓPS₆₋ₓIₓ (where 0<x<2). The sulfide solid electrolyte included in the solid electrolyte may be an argyrodite-type compound including at least one of Li₆PS₆Cl, Li₆PS₆Br, or Li₆PS₆I. As used herein, argyrodite is a silver germanium sulfide mineral that can be referred to using the formula Ag₈GeS₆. As used herein, the term "argyrodite compound" means that the compound is isostructural with argyrodite. In the disclosure, the term "isostructural" refers to crystal structures of chemical compounds. The crystal structures are the same, but the cell dimensions and/or the chemical composition may not be the same.

Next, a cathode may be prepared.

A cathode active material layer including a cathode active material may be formed on a cathode current collector to prepare the cathode. The cathode active material layer may be prepared by a vapor phase method or a solid phase method. The vapor phase method may include pulse laser deposition (PLD), sputtering deposition, chemical vapor deposition (CVD), or the like, but is not limited thereto. Any method available in the art may be used. Alternatively, the cathode active material layer may be prepared by a sintering method, a sol-gel method, a doctor blade method, a screen printing method, a slurry casting method, a powder pressing method, or the like, but is not necessarily limited thereto. Any method available in the art may be used.

The cathode active material layer may include a cathode active material. The cathode active material and the cathode current collector may be selected from materials used in the aforementioned lithium ion battery.

The cathode active material layer may additionally include a binder, a conductive material, or the like. The binder and conductive material may be selected from materials used in the aforementioned lithium ion battery.

The cathode active material layer may further include a solid electrolyte including the solid ion conductor represented by Formula 1. An amount of the solid electrolyte in the cathode active material layer may be about 5 parts by volume to about 50 parts by volume, about 5 parts by volume to about 40 parts by volume, or about 10 parts by volume to about 35 parts by volume, based on the total volume of the cathode active material layer. A protective layer including a solid electrolyte including the solid ion conductor represented by Formula 1 may be arranged on the cathode active material layer.

Next, an anode may be prepared.

The anode may be prepared in the same manner as in the cathode, except that an anode active material is used instead of the cathode active material. An anode active material layer including an anode active material may be formed on an anode current collector to prepare the anode.

The anode active material layer may include an anode active material. The anode active material may be selected from materials used in the aforementioned lithium ion battery. For example, the anode active material may include a lithium metal, a lithium metal alloy, or a combination thereof.

The anode active material layer may additionally include a binder, a conductive material, or the like. The binder and conductive material may be selected from materials used in the aforementioned lithium ion battery.

The anode active material layer may further include a solid electrolyte including the solid ion conductor represented by Formula 1. A protective layer including a solid electrolyte including the solid ion conductor represented by Formula 1 may be arranged on the anode active material layer.

For example, the all-solid-state battery may include the solid electrolyte, the cathode arranged on one side of the solid electrolyte, and the anode arranged on the other side of the solid electrolyte. The cathode may include a cathode active material layer in contact with the solid electrolyte and a cathode current collector in contact with the cathode active material layer, and the anode may include an anode active material layer in contact with the solid electrolyte and an anode current collector in contact with the anode active material layer. For example, in the all-solid-state battery, a cathode active material layer and an anode active material layer may be formed on both sides of the solid electrolyte, and a cathode current collector and an anode current collector may be formed on the cathode active material layer and the anode active material layer, respectively, thereby completing the manufacture of the all-solid-state battery. Alternatively, in the all-solid-state battery, the anode active material layer, the solid electrolyte, the cathode active material layer, and the cathode current collector may be sequentially deposited on the anode current collector, thereby completing the manufacture of the all-solid-state battery.

The all-solid-state battery employing a precipitated anode may be manufactured with the cathode and the solid electrolyte in the same manner as the all-solid-state battery employing a non-precipitated anode, except for the anode.

The anode may be prepared as follows.

The anode may include an anode current collector and an anode active material layer arranged on the anode current collector, and the anode active material layer may include, for example, an anode active material and a binder.

For example, the anode active material may be in a particle form. An average particle diameter of the anode active material in a particle form may be, for example, 4 µm or less, 3 µm or less, 2 µm or less, 1 µm or less, or 900 nm or less. The average particle diameter of the anode active material in a particle form may be, for example, about 10 nm to about 4 µm, about 10 nm to about 3 µm, about 10 nm to about 2 µm, about 10 nm to about 1 µm, or about 10 nm to about 900 nm. When the average particle diameter of the anode active material is within the ranges above, lithium may be more easily subjected to reversible absorbing and/or desorbing during charging and discharging. The average particle diameter of the anode active material may be, for example, a median diameter (D50) measured by using a laser particle size distribution meter.

For example, the anode active material may include at least one of a carbon-containing anode active material and a metal or metalloid anode active material.

For example, the carbon-containing anode active material may be amorphous carbon. For example, the amorphous carbon may include carbon black (CB), acetylene black (AB), furnace black (FB), ketjen black (KB), graphene, or the like, but is not limited thereto. Any material categorized as amorphous carbon in the art may be used. The amorphous carbon may be carbon that has no or very low crystallinity, and in this regard, may be distinguished from crystalline carbon or graphite-based carbon.

For example, the metallic or metalloid anode active material may include at least one of Au, Pt, Pd, Si, Ag, Al, Bi, Sn, or Zn, but is not limited thereto. Any material available as the metallic or metalloid anode active material capable of forming an alloy or compound with lithium in the art may be used. For example, since nickel (Ni) does not form an alloy with lithium, Ni may not be a metallic anode active material.

Among such anode active materials, the anode active material layer may include a single anode active material, or may include a mixture of a plurality of different anode active materials. In an embodiment, the anode active material layer may include only amorphous carbon, or may include at least one of Au, Pt, Pd, Si, Ag, Al, Bi, Sn, or Zn.

Alternatively, the anode active material layer may include a mixture of amorphous carbon with at least one Au, Pt, Pd, Si, Ag, Al, Bi, Sn, or Zn. A mixing weight ratio of the amorphous carbon to metal or the like in the mixture may be, for example, about 10:1 to about 1:2, about 5:1 to about 1:1, or about 4:1 to about 2:1, but is not limited thereto. The mixing weight ratio may be determined according to the characteristics of the all-solid-state battery. When the anode active material has such a composition, the cycle characteristics of the all-solid-state battery may be further improved.

For example, the anode active material may include a mixture of first particles of amorphous carbon and second particles of a metal or metalloid. For example, the metal or metalloid may include Au, Pt, Pd, Si, Ag, Al, Bi, Sn, Zn, or the like. The metalloid may be, for example, a semiconductor. An amount of the second particles may be about 8 wt% to about 60 wt%, about 10 wt% to about 50 wt%, about 15 wt% to about 40 wt%, or about 20 wt% to about 30 wt%, based on the total weight of the mixture. When the amount of the second particles is within the ranges above, the cycle characteristics of the all-solid-state battery may be further improved.

The binder may include, for example SBR, polytetrafluoroethylene, polyvinylidene fluoride, polyethylene, vinylidene fluoride/hexafluoropropylene copolymer, polyacrylonitrile, polymethylmethacrylate, or the like, but is not limited thereto. Any material available as a binder in the art may be used. The binder may be used alone or in a combination of a plurality of different binders.

When the anode active material layer includes the binder, the anode active material layer may be stabilized on the anode current collector. In addition, despite a change in volume and/or relative position of the anode active material layer during charging and discharging, cracking of the anode active material layer may be suppressed. For example, when the anode active material layer does not include the binder, the anode active material layer may be easily separated from the anode current collector. In areas where the anode current collector is exposed due to the separation of the anode active material layer form the anode current collector, the anode current collector may be in contact with the solid electrolyte, thereby increasing the possibility of a short circuit. The anode active material layer may be prepared by, for example, coating the anode current collector with a slurry in which materials constituting the anode active material layer are dispersed, and then drying the coated anode active material layer. When the anode active material layer includes the binder, the anode active material layer may be stably dispersed in the slurry. For example, when the anode current collector is coated with the slurry by a screen printing method, clogging of a screen (for example, clogging by an agglomerate of the anode active material) may be suppressed.

The anode active material layer may further include an additive generally used in an all-solid-state battery, such as a filler, a coating agent, a dispersant, an ionic conductive auxiliary agent, etc.

A thickness of the anode active material layer may be, for example, 50 % or less, 40 % or less, 30 % or less, 20 % or less, 10 % or less, or 5 % or less, of the thickness the cathode active material layer. For example, the thickness of the anode active material layer may be about 1 µm to about 20 µm, about 2 µm to about 10 µm, or about 3 µm to about 7 µm. When the anode active material layer is too thin, lithium dendrites formed between the anode active material layer and the anode current collector may cause the anode active material layer to collapse, making it difficult to improve the cycle characteristics of the all-solid-state battery. On the other hand, when the anode active material layer is too thick, the energy density of the all-solid-state battery may be decreased and the internal resistance of the all-solid-state battery by the anode active material layer may be increased, making it difficult to improve the cycle characteristics of the all-solid-state battery.

When the thickness of the anode active material layer decreases, the charge capacity of the anode active material layer may also decrease. For example, a charging capacity of the anode active material layer may be 50 % or less, 40 % or less, 30 % or less, 20 % or less, 10 % or less, 5 % or less, 2 % or less, or 1 % or less of a charging capacity of the cathode active material layer. For example, the charging capacity of the anode active material layer may be 0.1 % to 50 %, 0.1 % to 40 %, 0.1 % to 30 %, 0.1 % to 20 %, 0.1 % to 10 %, 0.1 % to 5 %, or 0.1 % to 2 %, with respect to the charging capacity of the cathode active material layer. When the charging capacity of the anode active material layer is excessively small, the anode active material layer becomes very thin, and thus lithium dendrites formed between the anode active material layer and the anode current collector during repeated charging and discharging processes may collapse the anode active material layer, making it difficult to improve the cycle characteristics of the all-solid-state battery. On the other hand, when the charging capacity of the anode active material layer is excessively increased, the energy density of the all-solid-state battery may be decreased and the internal resistance of the all-solid-state battery by the anode active material layer may be increased, making it difficult to improve the cycle characteristics of the all-solid-state battery.

The all-solid-state battery according to an embodiment may further include a metal layer arranged between the anode current collector and the anode active material layer. The metal layer may be a metal foil or a metal-precipitated layer. The metal layer may include Li or a Li alloy. In this regard, the metal layer may act as a lithium reservoir. For example, the Li alloy may include a Li-Al alloy, a Li-Sn alloy, a Li-In alloy, a Li-Ag alloy, a Li-Au alloy, a Li-Zn alloy, a Li-Ge alloy, a Li-Si alloy, or the like, but is not limited thereto. Any material available as a lithium alloy in the art may be used. The metal layer may include one of these alloys, lithium, or a combination of alloys.

A thickness of the metal layer is not particularly limited, but may be, for example, about 1 µm to about 200 µm, about 1 µm to about 100 µm, about 1 µm to about 70 µm, about 1 µm to about 50 µm, about 1 µm to about 30 µm, or about 1 µm to about 20 µm. When the metal layer is too thin, the metal layer may not function well as a lithium reservoir. When the metal layer is too thick, the mass and volume of the all-solid battery may be increased, and thus the cycle characteristics of the all-solid battery may be rather degraded. For example, the metal layer may be a metal foil with a thickness within the ranges above.

In the all-solid-state battery, the metal layer may be, for example, arranged between the anode current collector and the anode active material layer before assembly of the all-solid-state battery, or may be precipitated between the anode current collector and the anode active material layer by charging after assembly of the all-solid-state battery. When the metal layer is arranged between the anode current collector and the anode active material layer before assembly of the all-solid-state battery, the metal layer may act as a lithium reservoir because the metal layer contains lithium. For example, before assembly of the all-solid-state battery, a lithium foil may be arranged between the anode current collector and the anode active material layer. Accordingly, the cycle characteristics of the all-solid-state battery including the metal layer may be further improved. When the metal layer is precipitated by charging after assembly of the all-solid-state battery, the energy density of the all-solid-state battery may increase because the metal layer is not included during assembly of the all-solid-state battery. For example, when charging the all-solid-state battery, the all-solid-state battery may be charged in excess of the charging capacity of the anode active material layer. In other words, the anode active material layer may be overcharged. At the beginning of charging, Li may be adsorbed onto the anode active material layer. The anode active material included in the anode active material layer may form an alloy or compound with Li ions that have transported from the cathode. When the charging is performed in excess of the capacity of the anode active material layer, Li may be, for example, precipitated on a rear surface of the anode active material layer, i.e., a surface between the anode current collector and the anode active material layer, and due to the precipitated Li, a metal layer corresponding to the metal layer may be formed. The metal layer may be a metal layer mainly composed of lithium (i.e., metallic lithium). Such a result may be obtained, for example, when the anode active material included in the anode active material layer is composed of a material that forms an alloy or compound with Li. During discharging, Li included in the anode active material layer and the metal layer, i.e., Li in the metal layer, may be ionized and move toward the cathode layer. In this regard, Li may be used as the anode active material in the all-solid-state battery. In addition, since the metal layer is coated with the anode active material layer, the anode active material layer may serve as for the metal layer, i.e., as a protective layer of the metal layer, and at the same time, may serve to suppress the precipitation growth of lithium dendrites. Therefore, a short circuit and capacity degradation of the all-solid-state battery may be suppressed, and consequently, the cycle characteristics of the all-solid-state secondary battery may be improved. In addition, when the metal layer is arranged by charging after assembly of the all-solid-state battery, the anode current collector, the anode active material layer, and regions therebetween may be, for example, Li-free, which does not include Li, in the initial state or post-discharge state of the all-solid-state battery.

For example, the anode current collector may be composed of a material that does not react with lithium, that is, a material that forms neither an alloy nor a compound with lithium. A material for forming the anode current collector may be, for example, Cu, stainless steel, Ti, Fe, Co, Ni, or the like, but is not limited thereto. Any material available as an electrode current collector in the art may be used. The anode current collector may be composed of one of the aforementioned metals, or an alloy or coating material of two or more of the aforementioned metals. For example, the anode current collector may be in the form of a plate or foil.

The all-solid-state battery may further include, for example, a thin film (not shown), which includes an element capable of forming an alloy with Li, on the anode current collector. The thin film may be arranged between the anode current collector and the anode active material layer. For example, the thin film may include an element capable of forming an alloy with Li. For example, the element capable of forming an alloy with Li may include Au, Ag, Zn, Sn, In, Si, Al, Bi, or the like, but is not limited thereto. Any element capable of forming an alloy with Li in the art may be used. The thin film may include one of these metals or an alloy of several types of metals.

By depositing the thin film on the anode current collector, for example, a precipitation pattern of the metal layer precipitated between the thin film and the anode active material layer may be further flattened, and accordingly, the cycle characteristics of the all-solid-state battery may be further improved.

For example, a thickness of the thin film may be about 1 nm to about 800 nm, about 10 nm to about 700 nm, about 50 nm to about 600 nm, or about 100 nm to about 500 nm. When the thickness of the thin film is less than 1 nm, the thin film may have difficulty functioning. When the thin film is too thick, the thin film itself may adsorb Li so that an amount of Li precipitated in the anode may be decreased, and accordingly, the energy density and the cycle characteristics of the all-solid-state battery may be degraded. For example, the thin film may be arranged on the anode current collector by, for example, a vacuum deposition method, a sputtering method, a plating method, or the like, but is not limited thereto, Any method capable of forming a thin film in the art may be used.

### Multilayer ceramic (MLC) battery

An MLC battery may include, for example, multiple cathodes; multiple anodes alternately arranged between the multiple cathodes; and solid electrolytes alternately arranged between the multiple cathodes and the multiple anodes.

The MLC battery according to an embodiment may include multiple cathodes, each including a cathode current collector and cathode active material layers arranged on both sides of the cathode current collector; multiple anodes alternately arranged between the multiple cathodes, each including an anode current collector and anode active material layers arranged on both sides of the anode current collector; and solid electrolytes alternately arranged between the multiple cathodes and the multiple anodes, wherein at least one of the cathode active material layer or the anode active material layer may include an oxide solid electrolyte, such as a solid electrolyte including the solid ion conductor represented by Formula 1.

For example, the MLC battery may include a sintered product of a stacked body in which a cathode active material precursor, an anode active material precursor, and a solid electrolyte precursor are sequentially stacked, or a sintered product of a stacked body in which the cathode active material, the anode active material and the solid electrolyte are sequentially stacked.

For example, the MLC battery may have a stacked body structure in which multiple unit cells are stacked so that the cathode active material layer and the anode active material layer face each other, wherein the unit cell may include: the cathode including the cathode active material layer; the solid electrolyte; and the anode including the anode active material layer. For example, the MLC battery may further include a cathode current collector and/or an anode current collector. When the MLC battery includes a cathode current collector, the cathode active material layer may be arranged on both sides of the cathode current collector. When the MLC battery includes an anode current collector, the anode active material layer may be arranged on both sides of the anode current collector. When the MLC battery further includes the cathode current collector and/or the anode current collector, the high rate characteristics of the MLC battery may be further improved. In the MLC battery, the unit cells may be stacked by providing a current collector layer on either or both of the uppermost layer and the lowermost layer of the stacked body, or by arranged a metal layer in the stacked body.

The MLC battery or a thin-film battery may be, for example, a small or ultrasmall battery applicable as a power source for applications of the Internet of Things (IoT) or a power source for a wearable device. For example, the MLC battery or the thin-film battery may also be applicable to a medium to large-sized battery for an electric vehicle (EV), an energy storage system (ESS), etc.

The anode included in the MLC battery may include, for example, at least one anode active material of a lithium metal phosphate oxide, a lithium metal oxide, a metal oxide, or a carbon-containing anode active material. For example, the anode active material may be a compound selected from Li_{4/3}Ti_{5/3}O₄, LiTiO₂, LiM1ₛM2ₜOᵤ (where M1 and M2 are each a transition metal, and s, t, and u are each a positive number), TiOₓ (where 0<x≤3), or LiₓV₂(PO₄)₃ (where 0<x≤5). For example, the anode active material may be Li_{4/3}Ti_{5/3}O₄, LiTiO₂, or the like.

For example, the anode active material may be a carbon-containing anode active material. Examples of the carbon-containing anode active material may include amorphous carbon, crystalline carbon, porous carbon, or a combination thereof. The crystalline carbon may include, for example, graphite, such as natural graphite or artificial graphite, in a non-shaped, a plate-like type, a flake-like type, a spherical type, or a fibrous type.

The amorphous carbon may include, for example, CB, AB, FB, KB, graphene, soft carbon or hard carbon, mesophase pitch carbide, calcined coke, etc. The amorphous carbon may be carbon that has no or very low crystallinity, which distinguishes it from crystalline carbon.

The carbon-containing anode active material may be, for example, porous carbon. A volume of pores in the porous carbon may be, for example, about 0.1 cubic centimeter per gram (cc/g) to about 10.0 cc/g, about 0.5 cc/g to about 5 cc/g, or about 0.1 cc/g to about 1 cc/g. An average diameter of pores in the porous carbon may be, for example, about 1 nm to about 50 nm, about 1 nm to about 30 nm, or about 1 nm to about 10 nm. A Brunauer-Emmett-Teller (BET) specific surface area of the porous carbon may be, for example, about 100 square meters per gram (m²/g) to about 3,000 m²/g.

The anode active material may further include a solid electrolyte including the solid ion conductor represented by Formula 1. The anode active material further including the solid electrolyte including the solid ion conductor represented by Formula 1 may achieve high density and high ionic conductivity at a low sintering temperature. In addition, the adhesion between the anode active material and the solid electrolyte may be improved, thereby ensuring excellent MLC battery performance.

The cathode included in the MLC battery may include a cathode active material. The cathode active material may be selected from cathode active materials used in a lithium ion battery. For example, the cathode active material may include at least one of a lithium metal phosphorus oxide or a lithium metal oxide. For example, the cathode active material may include a lithium cobalt oxide, a lithium iron phosphorus oxide, a lithium nickel cobalt manganese oxide, a lithium nickel cobalt aluminum oxide, a lithium nickel cobalt manganese aluminum oxide, or a combination thereof. The cathode active material may further include a solid electrolyte including the solid ion conductor represented by Formula 1. The cathode active material further including the solid electrolyte including the solid ion conductor represented by Formula 1 may achieve high density and high ionic conductivity at a low sintering temperature. In addition, the adhesion between the cathode active material and the solid electrolyte may be improved, thereby ensuring excellent MLC battery performance.

For use as the current collector layer, any current collector available as a cathode current collector and/or an anode current collector may be used. For example, the current collector layer may be composed of any metal or alloy among Ni, Cu, Ag, Pd, Au, or Pt. For example, the alloy may be an alloy of two or more metals of Ni, Cu, Ag, Pd, Au or Pt. For example, the alloy may be a Ag/Pd alloy. Such a metal or an alloy may be used alone, or may be used as a mixture of two or more. A current collector layer as the cathode current collector and a current collector layer as the anode current collector may be formed by using the same or different materials. In an alloy or mixed powder of Ag/Pd, a melting point may change continuously and randomly from a melting point of Ag (962 °C) to a melting point of Pd (1,550 °C) depending on a mixing ratio. In this regard, the melting point may be adjusted to match a sintering temperature at once, and due to high electronic conductivity, an increase in the internal resistance of the MLC battery may be suppressed.

For example, the solid electrolyte may be an oxide solid electrolyte. The oxide solid electrolyte may be a solid electrolyte including the solid ion conductor represented by Formula 1. The oxide solid electrolyte may include an oxide solid electrolyte used in the aforementioned field, in addition to the solid electrolyte including the solid ion conductor represented by Formula 1.

For example, the MLC battery may be manufactured as follows.

A sheet is prepared. Solid electrolyte powders may be prepared to prepare a sheet. The solid electrolyte powder may be obtained by a mechanical milling method on an oxide solid electrolyte, such as a solid electrolyte including the solid ion conductor represented by Formula 1. The mechanical milling method may include ball-mill, airjet-mill, bead-mill, roll-mill, hand-milling, high-energy ball-mill, planetary ball mill, stirred ball mill, vibrating mill, mechanofusion milling, shaker milling, planetary milling, attritor milling, disk milling, shape milling, nauta milling, nobilta milling, high-speed mix, or a combination thereof. A solid electrolyte slurry or a solid electrolyte paste may be prepared by mixing the solid electrolyte powders with a binder or by mixing the solid electrolyte powder, a binder, and a solvent. The binder may use the same material as the binder used in the all-solid-state battery. For use as the solvent, a solvent available in the lithium battery may be used. The solid electrolyte slurry or the solid electrolyte paste may be poured onto a doctor blade set at a predetermined height, and tape casting may be performed thereon by using a PET substrate film or a carrier film moving at a speed of about 1.0 meter per minute (m/min) to about 3.0 m/min to prepare a sheet having a thickness of several micrometers to tens of micrometers. Then, as described above, the multiple cathodes, the multiple anodes alternately arranged between the multiple cathodes, and the aforementioned sheet-shaped solid electrolytes alternately arranged between the multiple cathodes and the multiple anodes may be stacked to manufacture a laminate. The manufactured laminate may be pressed by using an isostatic pressing method such as a warm isostatic pressing (WIP) method. The pressed laminate may be cut into chip sizes. The cut laminate may be sintered or sintered under reduced pressure simultaneously with the electrode active material to manufacture a sintered laminate from which the binder has been removed. The temperature at which the sintering is performed simultaneously with the electrode active material may be about 400 °C to about 600 °C. For example, the temperature at which the sintering is performed simultaneously with the electrode active material may be 450 °C or greater, 500 °C or greater, or 570 °C or less, or 550 °C or less. Tabs may be formed by using an electrode paste on the sintered laminate to complete the manufacture of the MLC battery.

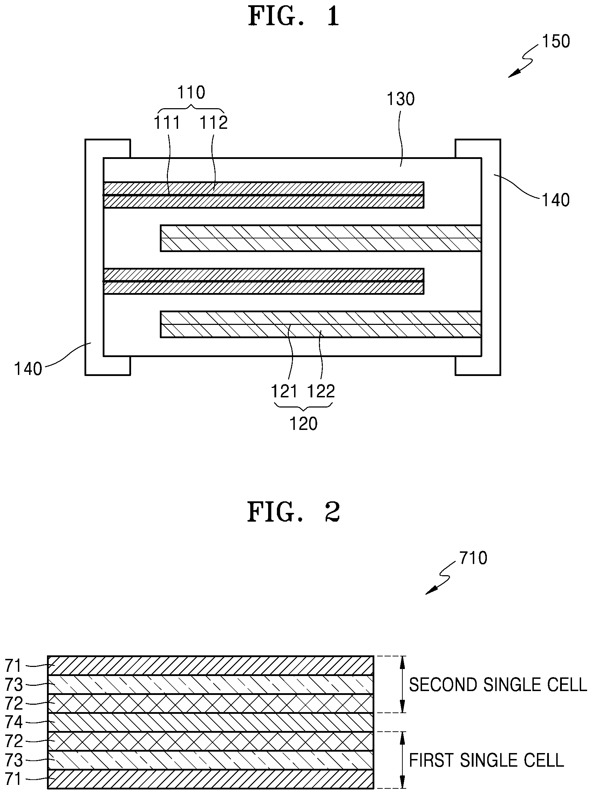

FIG. 1 is a schematic cross-sectional view of an MLC battery according to an embodiment.

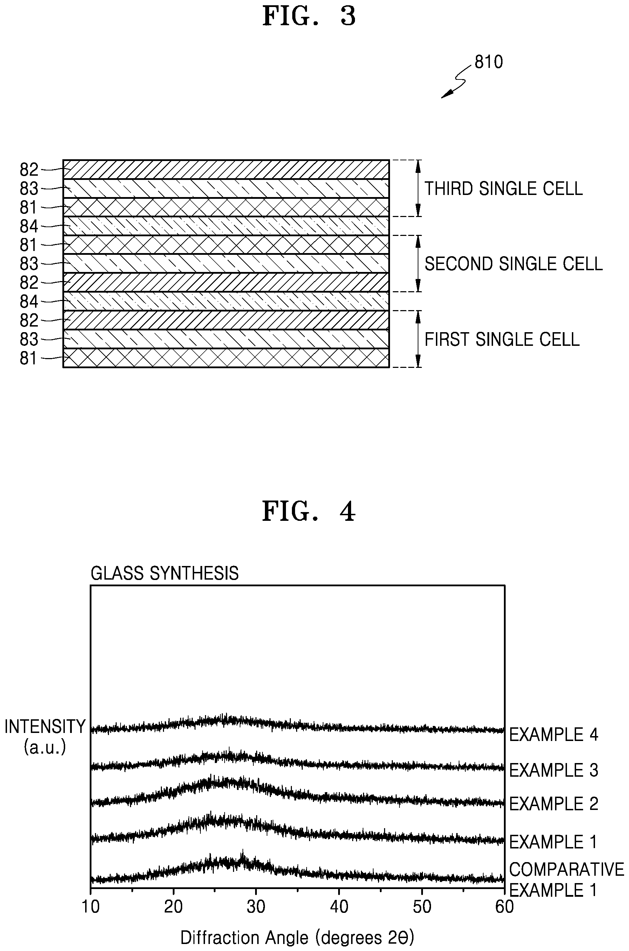

Referring to FIG. 1, a cathode 110 is formed by arranging cathode active material layers 112 on both sides of a cathode current collector 111. Likewise, an anode 120 is formed by arranging anode active material layers 122 on both sides of an anode current collector 121. A solid electrolyte 130 is arranged between the cathode 110 and the anode 120. External electrodes 140 may be formed at both ends of a battery body 150. The external electrodes 140 may be connected to the cathode 110 and the anode 120, of which ends of each the cathode 110 and the anode 120 are exposed to the outside of the battery body 150. In this regard, the external electrodes 140 may serve as external terminals that electrically connect the cathode 110, the anode 120, and the external electrodes 140. One of a pair of the external electrodes 140 may be connected to the cathode 110 of which the end is exposed to the outside of the battery body 150, and the other one of the pair may be connected to the anode 120 of which the other end exposed to the outside of the battery body 150. In the MLC battery, the cathode 110 including the cathode active material layers 112, a solid electrolyte including a glassy solid ion conductor, and the anode 120 including the anode active material layers 122 that are carbon-containing may be sequentially stacked, and then, the electrode active materials and the solid electrolyte including the glassy solid ion conductor solid electrolyte may be simultaneously sintered to form a solid electrolyte 130 including the solid ion conductor having crystals. FIGS. 2 and 3 are each a schematic view showing a cross-sectional structure of an MLC battery according to another embodiment. As shown in FIG. 2, in an MLC battery 710, a first single cell and a second single cell may be stacked through an inner current collector layer 74. Each of the first single cell and the second single cell may be composed of a cathode layer 71, a solid electrolyte layer 73, and an anode layer 72 that are sequentially stacked. The first single cell, the second single cell, and the inner current collector layer 74 may be stacked in a way that the anode layer 72 of the second single cell is adjacent to one side of the inner current collector layer 74 (i.e., top surface in FIG. 2) and the anode layer 72 of the first single cell is adjacent to the other side of the inner current collector layer 74 (i.e., the bottom surface in FIG. 2). In FIG. 2, the inner current collector layer 74 is arranged to be in contact with the anode layer 72 of each of the first single cell and the second single cell, but the inner current collector layer 74 may be arranged to be in contact with the cathode layer 71 of each of the first single cell and the second single cell. The inner current collector layer 74 may include an electronically conductive material. The inner current collector layer 74 may further include an ionic conductive material. By further including the ionic conductive material, the voltage stabilization characteristics may be improved. The same poles may be then arranged on both sides of the inner current collector layer 74 in the MLC battery 710, and accordingly a monopolar-type MLC battery 710 in which multiple single cells are connected in parallel through the inner current collector layer 74 may be obtained. Accordingly, a high-capacity MLC battery 710 may be obtained. In the MLC battery 710, the inner current collector layer 74 arranged between the first single cell and the second single cell may include an electrically conductive material. In this regard, two adjacent single cells may be electrically connected in parallel, and at the same time, the inner current collector 74 may be connected to the cathode layer 71 or the anode layer 72 of the two adjacent single cells in an ionically conductive manner. Accordingly, the potential of the cathode layer 71 or the anode layer 72 adjacent to the inner current collector layer 74 may be averaged through the inner current collector layer 74, so that a stable output voltage may be obtained. In addition, an external current collecting member, such as a tab, may be eliminated and the single cells constituting the MLC battery 710 may be electrically connected in parallel. Accordingly, the MLC battery 710 having excellent space utilization and economic efficiency may be obtained. Referring to FIG. 3, a laminate may include a cathode layer 81, an anode layer 82, a solid electrolyte layer 83, and an inner current collector layer 84. Such a laminate may be stacked and thermally compressed to obtain a stacked MLC battery 810. The cathode layer 81 may be composed of a single sheet for the cathode layer. The anode layer 82 may be composed of two sheets for the anode layer.

Hereinafter, Examples and Comparative Examples of the disclosure will be described. However, Examples below are only examples of the disclosure, and the disclosure is not limited thereto.

### Examples

### Preparation of solid ion conductor

### Example 1: Solid ion conductor of Li₄B_{5.1}Al_{1.8}Sb_{0.1}O₁₂Cl

To obtain a glassy solid ion conductor of Li₄B_{5.1}Al_{1.8}Sb_{0.1}O₁₂Cl, Li₂CO₃, B₂O₃, Al₂O₃, Sb₂O₃, and LiCI were added in stoichiometric proportions into a reactor. The raw materials were mixed for 15 minutes at 500 rpm by using a planetary mill (Pulverisette 7 premium line) loaded with zirconia (YSZ) balls having a diameter of 10 millimeters (mm), and then rested for 5 minutes. This cycle of mixing and resting was repeated for 3 hours, to obtain a milled mixture. The milled mixture was added into a jar and pre-heat treated at about 1,000 °C for 5 hours, to obtain a melt. The melt was dropped between two rollers, quenched down to 200 °C or less in a cooling time of 1 second, and then subjected to screen printing, to prepare a glassy ionic conductor of Li₄B_{5.1}Al_{1.8}Sb_{0.1}O₁₂Cl. The glassy ionic conductor of Li₄B_{5.1}Al_{1.8}Sb_{0.1}O₁₂Cl thus prepared was added to a furnace under an air atmosphere and heat treated at about 540 °C for about 30 minutes, to prepare a ceramic solid ion conductor with Li₄B_{5.1}Al_{1.8}Sb_{0.1}O₁₂Cl crystals.

### Example 2: Solid ion conductor of Li₄B₅Al_{1.8}Sb_{0.2}O₁₂Cl

A ceramic solid ion conductor with Li₄B₅Al_{1.8}Sb_{0.2}O₁₂Cl crystals was prepared in the same manner as in Example 1, except that Li₂CO₃, B₂O₃, Al₂O₃, Sb₂O₃, and LiCI were added in stoichiometric proportions into a reactor to obtain a glassy solid ion conductor of Li₄B₅Al_{1.8}Sb_{0.2}O₁₂Cl.

### Example 3: Solid ion conductor of Li₄B_{4.9}Al_{1.8}Sb_{0.3}O₁₂Cl

A ceramic solid ion conductor with Li₄B_{4.9}Al_{1.8}Sb_{0.3}O₁₂Cl crystals was prepared in the same manner as in Example 1, except that Li₂CO₃, B₂O₃, Al₂O₃, Sb₂O₃, and LiCI were added in stoichiometric proportions into a reactor to obtain a glassy solid ion conductor of Li₄B_{4.9}Al_{1.8}Sb_{0.3}O₁₂Cl.

### Example 4: Solid ion conductor of Li₄B_{4.6}Al_{1.8}Sb_{0.6}O₁₂Cl

A ceramic solid ion conductor of Li₄B_{4.6}Al_{1.8}Sb_{0.6}O₁₂Cl having crystals was prepared in the same manner as in Example 1, except that Li₂CO₃, B₂O₃, Al₂O₃, Sb₂O₃, and LiCI were added in stoichiometric proportions into a reactor to obtain a glassy solid ion conductor of Li₄B_{4.6}Al_{1.8}Sb_{0.6}O₁₂Cl.

### Example 5: Composite solid ion conductor of Li₄B_{4.9}Al_{1.8}Sb_{0.3}O₁₂Cl and Li₄B₄Al₃O₁₂Cl

A ceramic composite solid ion conductor including Li₄B_{4.9}Al_{1.8}Sb_{0.3}O₁₂Cl crystals and Li₄B₄Al₃O₁₂Cl crystals was prepared in the same manner as in Example 1, except that a mixed raw material of a first raw material and a second raw material mixed at a volume ratio of 50:50 was used, wherein the first raw material was prepared by adding Li₂CO₃, B₂O₃, Al₂O₃, Sb₂O₃, and LiCI in stoichiometric proportions into a reactor to obtain a glassy solid ion conductor of Li₄B_{4.9}Al_{1.8}Sb_{0.3}O₁₂Cl, and the second raw material was prepared by adding Li₂CO₃, B₂O₃, Al₂O₃, and LiCI in stoichiometric proportions into a reactor to obtain a glassy solid ion conductor of Li₄B₄Al₃O₁₂Cl.

### Comparative Example 1: Solid ion conductor of Li₄B₄Al₃O₁₂Cl

A ceramic solid ion conductor of Li₄B₄Al₃O₁₂Cl having crystals was prepared in the same manner as in Example 1, except that Li₂CO₃, B₂O₃, Al₂O₃, and LiCI were added in stoichiometric proportions into a reactor to obtain a glassy solid ion conductor of Li₄B₄Al₃O₁₂Cl.

### Evaluation Example 1: ICP analysis

The compositions of the glassy solid ion conductors of Examples 1 to 4 were analyzed by using an inductively coupled plasma spectrometer (ICP), and the results are shown in Table 1.

**Table 1**

| | Compositional design | | | | Composition by ICP analysis | | | |
|---|---|---|---|---|---|---|---|---|
| | Li | B | Al | Sb | Li | B | Al | Sb |
| Example 1 | 4 | 5.1 | 1.8 | 0.1 | 4 | 5.24 | 1.94 | 0.09 |
| Example 2 | 4 | 5 | 1.8 | 0.2 | 4 | 5.21 | 1.95 | 0.18 |
| Example 3 | 4 | 4.9 | 1.8 | 0.3 | 4 | 5.31 | 1.90 | 0.25 |
| Example 4 | 4 | 4.6 | 1.8 | 0.6 | 4 | 5.01 | 1.89 | 0.56 |

Referring to Table 1, it was demonstrated that the designed compositions of the glassy solid ion conductors of Examples 1 to 4 closely matched with the compositions as measured by the ICP analysis.

### Evaluation Example 2: X-ray diffraction analysis

Before and after the heat treatment of the glassy solid ion conductors of Comparative Example 1 and Examples 1 to 4, the phases of each of the glassy solid ion conductor and the ceramic solid ion conductor including crystals were analyzed by X-ray diffraction (XRD) and with the naked eye. For the XRD analysis, the XRD spectrum was measured with X'pert pro (PANalytical) using CuKα radiation (1.54056 angstroms, Å).

### (1) Glassy solid ion conductor

The results of measuring the XRD spectrum for each glassy solid ion conductor are shown in FIG. 4.

Referring to FIG. 4, all of the glassy solid ion conductors of Comparative Example 1 and Examples 1 to 4 had amorphous phases with no defined peaks for diffraction angles between 10°2θ and 60°2θ. That is, it was demonstrated that the glassy solid ion conductors prepared in Comparative Example 1 and Examples 1 to 4 were well formed regardless of the Sb doping quantity.

In addition, the devitrification of each glassy solid ion conductor was observable with the naked eye. Here, the term "devitrification" refers to formation of crystals in glass and loss of transparency on an area where the crystals are formed. As a result of the macroscopic observations, it was demonstrated that none of the glassy solid ion conductors prepared in Examples 1 to 4 and Comparative Example 1 exhibited a devitrification phenomenon, indicating that all the glassy solid ion conductors maintained the amorphous phase.

### (2) Ceramic solid ion conductor having crystals

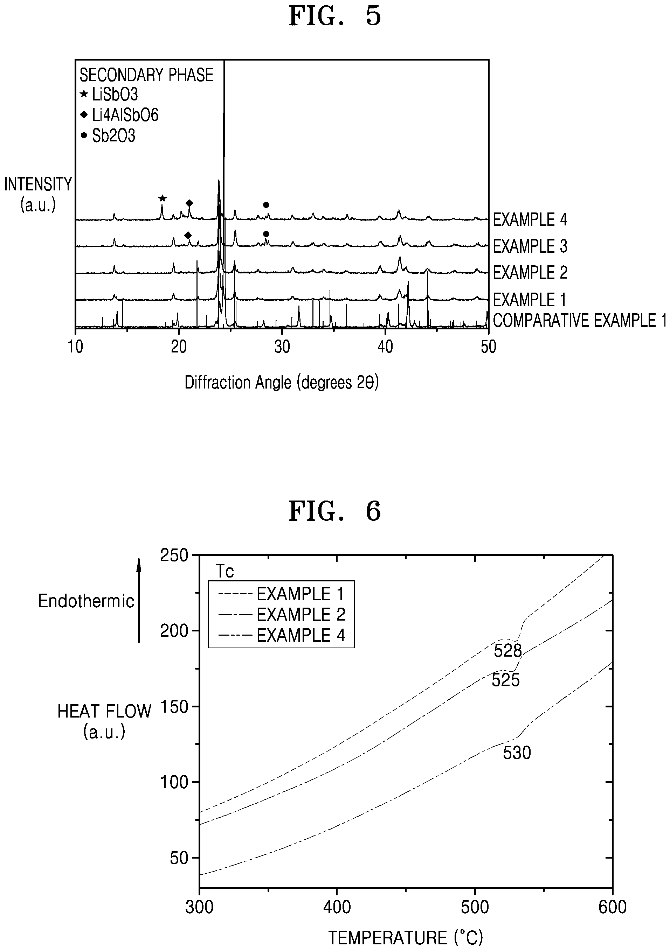

The XRD spectra for each solid ion conductor having crystals are shown in FIG. 5.

Referring to FIG. 5, it was demonstrated that all the ceramic solid ion conductors having crystals prepared in Comparative Example 1 and Examples 1 to 4 had a major peak at a diffraction angle of 24°2θ ±1°2θ and a minor peaks at diffraction angles of 13°2θ ±1°2θ, 19°2θ ±1°2θ, 23°2θ ±1°2θ, and 42°2θ ±1°2θ, indicating that the crystallization of the ceramic solid ion conductors. As the doping amount of Sb increased in the glassy solid ion conductors prepared in Examples 1 to 4 (Examples 3 and 4), the secondary phases, such as LiSbOs, Li₄AlSbO₆, and Sb₂O₃, were produced.

In addition, the devitrification of each solid ion conductor having crystals was observed with the naked eye. As a result of the macroscopic observations, it was demonstrated that all the ceramic solid ion conductors having crystals prepared in Comparative Example 1 and Examples 1 to 4 exhibited a devitrification phenomenon similar to crystallization.

### Evaluation Example 3: DSC and gas pycnometer analysis

For the glassy solid ion conductors of Examples 1 to 4, the results of measuring the glass transition temperature (T_{g}), initial thermal decomposition temperature (Tₛ), and crystallization temperature (T_{c}) by differential scanning calorimetry (DSC) and the results of measuring the density (g/cm³) by using a gas pycnometer are shown in Table 2, and the results for the glassy solid ion conductors of Examples 1, 2, and 4 are shown in FIG. 6.

For the DSC spectrum analysis, a DSC differential scanning calorimeter manufactured by PerkinElmer was used from room temperature to 600 °C under an N₂ atmosphere at a heating rate of 10 °C/min. The DSC spectrum is an "Endo up" spectrum, which indicates the peak direction upward for endothermic reactions and downward for exothermic reactions, and the numbers written on the peaks are the crystallization temperatures (T_{c}).

For the density analysis using a gas pycnometer, a sample weighed by using a Micromeritics device was placed in a sample chamber, and the volume of the sample was measured from the pressure change with respect to reference chambers with known volumes. The density value was calculated by applying the measured value to the equation for ideal gas law (PV = nRT).

**Table 2**

| | DSC analysis | | | Gas pycnometer |
|---|---|---|---|---|
| | T_{g} (°C) | Tₛ (°C) | T_{c} (°C) | Density (g/cm³) |
| Example 1 | 431 | 513 | 528 | 2.31 |
| Example 2 | 428 | 505 | 525 | 2.24 |
| Example 3 | 429 | 518 | 534 | 2.39 |
| Example 4 | 417 | 508 | 530 | 2.52 |

Referring to Table 2 and FIG. 6, the glassy solid ion conductors of Examples 1 to 4 had the glass transition temperature T_{g} of 432 °C or less and the crystallization temperature T_{c} of 550 °C or less. In addition, the glassy solid ion conductors of Examples 1 to 4 had the density of 2.24 g/cm³ to 2.52 g/cm³ that are generally high.

### Evaluation example 4: SEM analysis

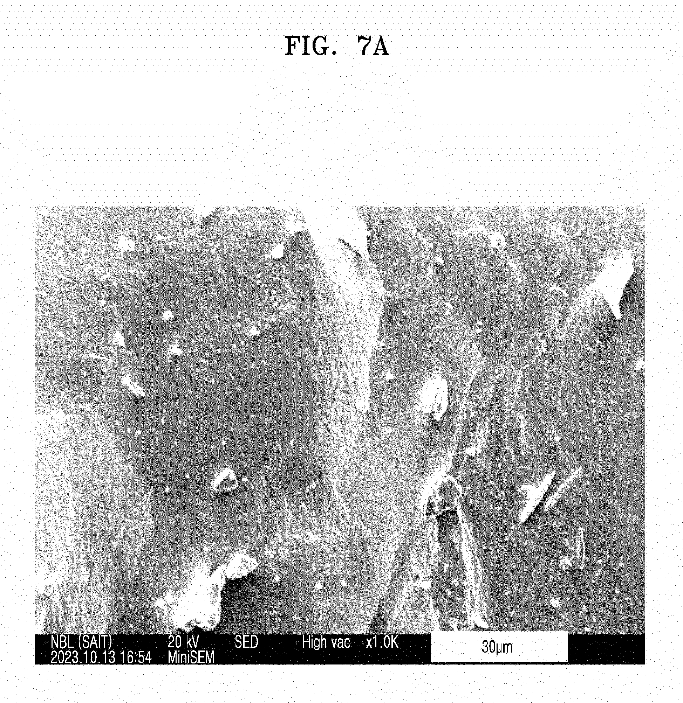

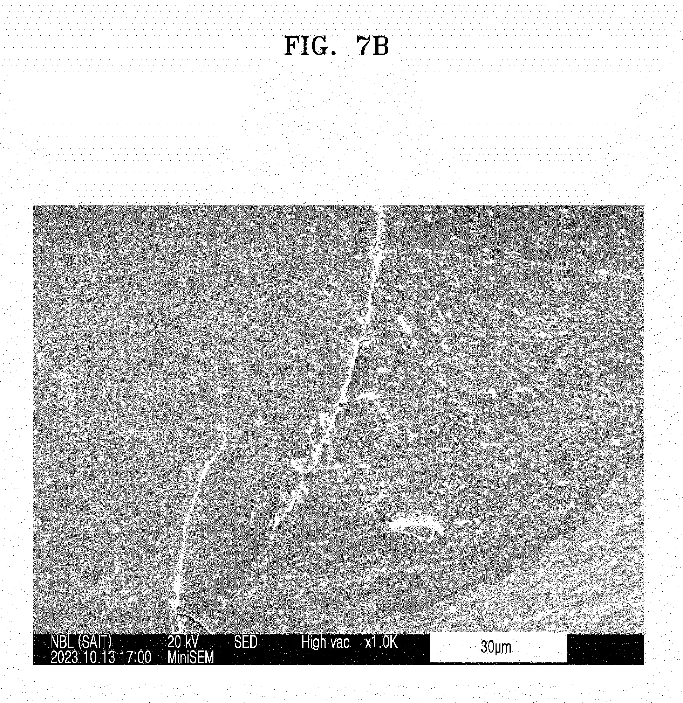

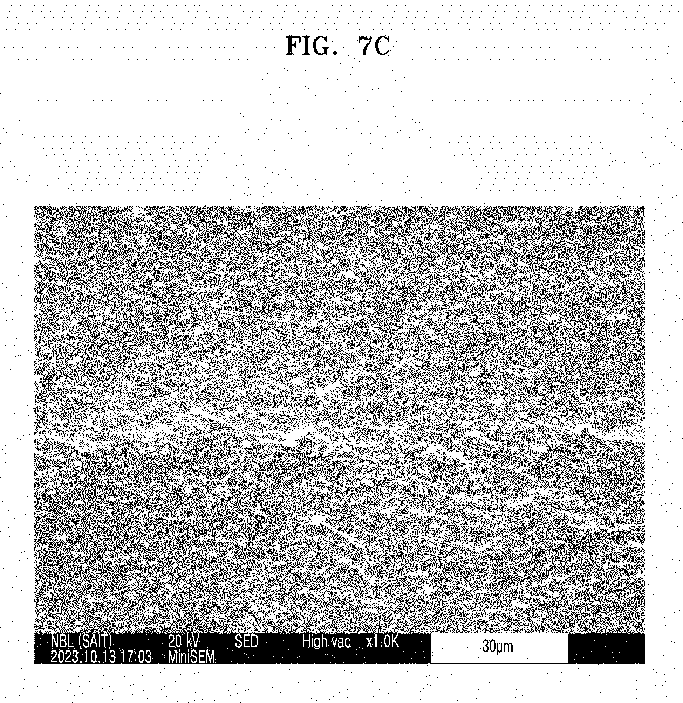

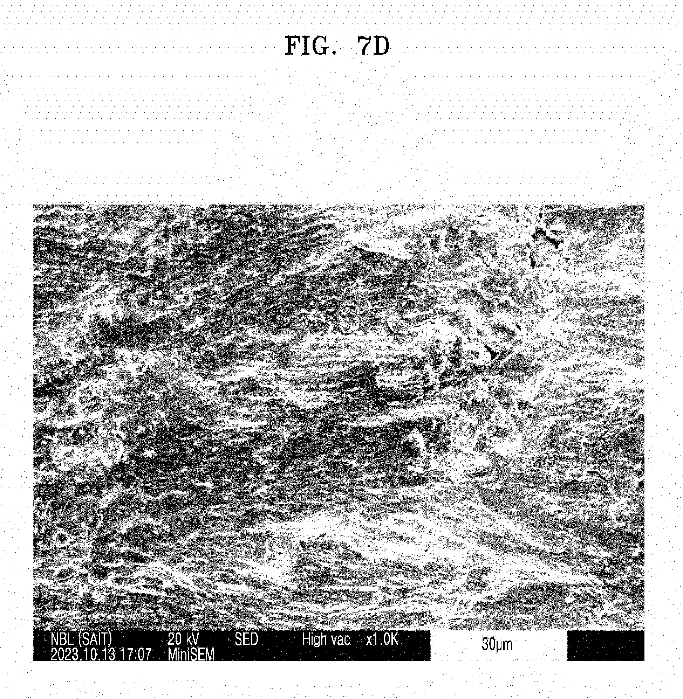

500 µm thick-316SS and 304SS spacers were applied as blocking electrodes on both sides of the cullet (thickness: 400 µm) of the glassy solid ion conductors of Examples 1 to 4, and heat treatment was performed thereon at a pressure of 50 MPa and a temperature of 550 °C (hereinafter referred to as "hot-press sintering" (HPS)). Then, a resulting sintered product was held with pincers, and the fractured surface was analyzed by scanning electron microscope (SEM). The results are shown in FIGS. 7A, 7B, 7C, and 7D.

Referring to FIGS. 7A, 7B, 7C, and 7D, the fractured surfaces of the cullet of the glassy solid ion conductors of Examples 1 to 4 that have been crystallized by HPS showed a very dense microstructure with few pores.

Accordingly, it was confirmed that the energy density will be improved when manufacturing a lithium battery by including the solid ion conductor crystallized from the glassy solid ion conductor of Examples 1 to 4 in the solid electrolyte.

### Evaluation Example 5: Analysis of ion conductivity and electronic conductivity

The cullet (thickness: 400 µm) of the glassy solid ion conductors of Comparative Example 1 and Examples 1 to 4 were heat treated at 550 °C for 30 minutes without polishing the surface in an air box furnace (hereinafter referred to as "box sintering"), to prepare the specimens. Gold (Au) electrodes were formed on both sides of the specimen by depositing a 200 nm thick-Au paste with a 5 pi hole on the top by using a sputtering method. Wires were connected to the Au electrodes on both sides of the specimen, and analysis was performed by electrochemical impedance spectroscopy (EIS).

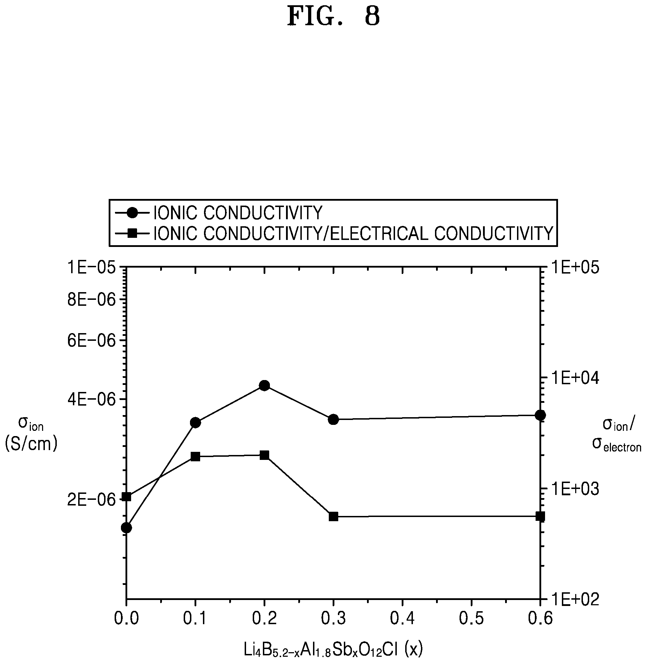

The EIS analysis was performed with an amplitude of about 10 millivolts (mV) and a frequency of 1 hertz (Hz) to 10⁶ Hz. As an impedance analyzer, a potentiostat/galvanostat and a 1455 frequency response analyzer (FRA) multi-channel test module (Solatron Analytical, UK) were used. The impedance of the cullet was measured at room temperature (25 °C) by using a 2-probe method. The resistance values were obtained from the arc of the Nyquist plot for the impedance measurement results, and the electronic conductivity was calculated as the reciprocal of the resistance values. Then, the ionic conductivity was calculated by correcting the electrode area and cullet thickness. The ionic conductivity was divided by the electronic conductivity to calculate the value. The results are shown in Table 3, and FIG. 8.

**Table 3**

| | Electronic conductivity (S/cm) | Ionic conductivity (S/cm) | Ionic conductivity/electronic conductivity |
|---|---|---|---|
| Comparative Example 1 | 2.0 × 10⁻⁹ | 1.6 × 10⁻⁶ | 8.4 × 10² |
| Example 1 | 1.7 × 10⁻⁹ | 3.4 × 10⁻⁶ | 1.9 × 10³ |
| Example 2 | 2.2 × 10⁻⁹ | 4.4 × 10⁻⁶ | 2.0 × 10³ |
| Example 3 | 6.3 × 10⁻⁹ | 3.5 × 10⁻⁶ | 5.5 × 10² |
| Example 4 | 6.4 × 10⁻⁹ | 3.6 × 10⁻⁶ | 5.6 × 10² |

Referring to Table 3 and FIG. 8, the ionic conductivity of the solid ion conductor crystallized by box sintering on the cullet of the glassy solid ion conductors of Examples 1 to 4 ranged from 3.4 × 10⁻⁶ Scm⁻¹ up to 4.4 × 10⁻⁶ Scm⁻¹ . The ionic conductivity of the solid ion conductor obtained by crystallizing the cullet of the glassy solid ion conductor of Example 2 was improved by about 2.7-fold compared to the solid ion conductor obtained by crystallizing the cullet of the glassy solid ion conductor of Comparative Example 1.

In addition, the cullet (thickness: 400 µm) of the glassy solid ion conductor of Example 2 was heat treated (HPS) at a pressure of 50 MPa and a temperature of 550 °C by using spacers as blocking electrodes in the same manner as in Evaluation Example 4, to prepare a specimen. Wires were connected to the spacers as blocking electrodes on both sides of the specimen, and EIS analysis was performed in the same manner as in Evaluation Example 5 to calculate the electronic conductivity, ionic conductivity, and ionic conductivity/electronic conductivity.

Accordingly, the results summarizing the electronic conductivity, ionic conductivity, and ionic conductivity/electronic conductivity of the solid ion conductors that have been crystallized by box sintering and HPS on the cullet of the glassy solid ion conductor of Example 2 are shown in Table 4 and FIG. 9.

**Table 4**

| | Electronic conductivity (S/cm) | Ionic conductivity (S/cm) | Ionic conductivity Electronic conductivity |
|---|---|---|---|
| Example 2 (Box sintering) | 2.2 × 10⁻⁹ | 4.4 × 10⁻⁶ | 2.0 × 10³ |
| Example 2 (Hot-press sintering) | 5.5 × 10⁻¹⁰ | 1.2 × 10⁻⁵ | 2.2 × 10⁴ |

Referring to Table 4 and FIG. 9, the ionic conductivity of the solid ion conductors that have been crystallized by HPS on the cullet of the glassy solid ion conductor of Example 2 was excellent at 1.2 × 10⁻⁵ S/cm.

Accordingly, the solid electrolyte including the glass-ceramic solid ion conductor of the present disclosure may realize high density and high ionic conductivity at a low sintering temperature, and may be applied to an MLC battery laminated with a plurality of thin-film layers.

According to the one or more embodiments, a solid electrolyte may include a solid ion conductor represented by Formula 1. The solid electrolyte including the solid ion conductor may achieve high density and high ionic conductivity at a low sintering temperature.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

1. A solid electrolyte comprising a solid ion conductor represented by Formula 1:
Formula 1 LiₐB_{b}AlₘQnO_{c}X_{d}
wherein, in Formula 1,
Q is an element that has an ionic radius that differs from an ionic radius of Al by less than 30 % and has +3 and +5 valence states,
X is at least one of F, Cl, Br, or I,
3.5 ≤ a ≤ 4.5, 3 ≤ b < 5.2, 1 ≤ m ≤ 3, 0 < n < 2, 11 ≤ c ≤ 13, and 0 < d ≤ 1.5.

2. The solid electrolyte of claim 1, wherein, in Formula 1, the ionic radius of Q is 50 picometers to 100 picometers.

3. The solid electrolyte of claims 1 or 2, wherein, in Formula 1, Q includes at least one of Sb or V; and/or
wherein, in Formula 1, Q is a substitutional dopant that substitutes for at least one of a B or an Al in Formula 1.

4. The solid electrolyte of any of claims 1-3, wherein the solid ion conductor includes at least one of:
Li₄B_{5.1}Al_{1.8}Sb_{0.1}O₁₂F, Li₄B₅Al_{1.8}Sb_{0.2}O₁₂F, Li₄B_{4.9}Al_{1.8}Sb_{0.3}O₁₂F, Li₄B_{4.8}Al_{1.8}Sb_{0.4}O₁₂F, Li₄B_{4.7}Al_{1.8}Sb_{0.5}O₁₂F, Li₄B_{4.6}Al_{1.8}Sb_{0.6}O₁₂F, Li₄B_{4.5}Al_{1.8}Sb_{0.7}O₁₂F, Li₄B_{4.4}Al_{1.8}Sb_{0.8}O₁₂F, or Li₄B_{4.3}Al_{1.8}Sb_{0.9}O₁₂F,
Li₄B_{5.1}Al_{1.8}Sb_{0.1}O₁₂Cl, Li₄B₅Al_{1.8}Sb_{0.2}O₁₂Cl, Li₄B_{4.9}Al_{1.8}Sb_{0.3}O₁₂Cl, Li₄B_{4.8}Al_{1.8}Sb_{0.4}O₁₂Cl, Li₄B_{4.7}Al_{1.8}Sb_{0.5}O₁₂Cl, Li₄B_{4.6}Al_{1.8}Sb_{0.6}O₁₂Cl, Li₄B_{4.5}Al_{1.8}Sb_{0.7}O₁₂Cl, Li₄B_{4.4}Al_{1.8}Sb_{0.8}O₁₂Cl, Li₄B_{4.3}Al_{1.8}Sb_{0.9}O₁₂Cl,
Li₄B_{5.1}Al_{1.8}Sb_{0.1}O₁₂Br, Li₄B₅Al_{1.8}Sb_{0.2}O₁₂Br, L₁₄B_{4.9}Al_{1.8}Sb_{0.3}O₁₂Br, L₁₄B_{4.8}Al_{1.8}Sb_{0.4}O₁₂Br, Li₄B_{4.7}Al_{1.8}Sb_{0.5}O₁₂Br, Li₄B_{4.6}Al_{1.8}Sb_{0.6}O₁₂Br, Li₄B_{4.5}Al_{1.8}Sb_{0.7}O₁₂Br, Li₄B_{4.4}Al_{1.8}Sb_{0.8}O₁₂Br, Li₄B_{4.3}Al_{1.8}Sb_{0.9}O₁₂Br,
Li₄B_{5.1}Al_{1.8}Sb_{0.1}O₁₂I, Li₄B₅Al_{1.8}Sb_{0.2}O₁₂I, Li₄B_{4.9}Al_{1.8}Sb_{0.3}O₁₂I, Li₄B_{4.8}Al_{1.8}Sb_{0.4}O₁₂I, Li₄B_{4.7}Al_{1.8}Sb_{0.5}O₁₂I, Li₄B_{4.6}Al_{1.8}Sb_{0.6}O₁₂I, Li₄B_{4.5}Al_{1.8}Sb_{0.7}O₁₂I, Li₄B_{4.4}Al_{1.8}Sb_{0.8}O₁₂I, Li₄B_{4.3}Al_{1.8}Sb_{0.9}O₁₂I,
Li₄B_{5.1}Al_{1.8}V_{0.1}O₁₂F, Li₄B₅Al_{1.8}V_{0.2}O₁₂F, Li₄B_{4.9}Al_{1.8}V_{0.3}O₁₂F, Li₄B_{4.8}Al_{1.8}V_{0.4}O₁₂F, Li₄B_{4.7}Al_{1.8}V_{0.5}O₁₂F, Li₄B_{4.6}Al_{1.8}V_{0.6}O₁₂F, Li₄B_{4.5}Al_{1.8}V_{0.7}O₁₂F, Li₄B_{4.4}Al_{1.8}V_{0.8}O₁₂F, Li₄B_{4.3}Al_{1.8}V_{0.9}O₁₂F,
Li₄B_{5.1}Al_{1.8}V_{0.1}O₁₂Cl, Li₄B₅Al_{1.8}V_{0.2}O₁₂Cl, Li₄B_{4.9}Al_{1.8}V_{0.3}O₁₂Cl, Li₄B_{4.8}Al_{1.8}V_{0.4}O₁₂Cl, Li₄B_{4.7}Al_{1.8}V_{0.5}O₁₂Cl, Li₄B_{4.6}Al_{1.8}V_{0.6}O₁₂Cl, Li₄B_{4.5}Al_{1.8}V_{0.7}O₁₂Cl, Li₄B_{4.4}Al_{1.8}V_{0.8}O₁₂Cl, Li₄B_{4.3}Al_{1.8}V_{0.9}O₁₂Cl,
Li₄B_{5.1}Al_{1.8}V_{0.1}O₁₂Br, Li₄B₅Al_{1.8}V_{0.2}O₁₂Br, Li₄B_{4.9}Al_{1.8}V_{0.3}O₁₂Br, L₁₄B_{4.8}Al_{1.8}V_{0.4}O₁₂Br, Li₄B_{4.7}Al_{1.8}V_{0.5}O₁₂Br, Li₄B_{4.6}Al_{1.8}V_{0.6}O₁₂Br, Li₄B_{4.5}Al_{1.8}V_{0.7}O₁₂Br, Li₄B_{4.4}Al_{1.8}V_{0.8}O₁₂Br, Li₄B_{4.3}Al_{1.8}V_{0.9}O₁₂Br,
Li₄B_{5.1}Al_{1.8}V_{0.1}O₁₂I, Li₄B₅Al_{1.8}V_{0.2}O₁₂I, Li₄B_{4.9}Al_{1.8}V_{0.3}O₁₂I, Li₄B_{4.8}Al_{1.8}V_{0.4}O₁₂I, Li₄B_{4.7}Al_{1.8}V_{0.5}O₁₂I, Li₄B_{4.6}Al_{1.8}V_{0.6}O₁₂I, Li₄B_{4.5}Al_{1.8}V_{0.7}O₁₂I, Li₄B_{4.4}Al_{1.8}V_{0.8}O₁₂I, or Li₄B_{4.3}Al_{1.8}V_{0.9}O₁₂I.

5. The solid electrolyte of any of claims 1-4, wherein the solid ion conductor is at least one of a glassy solid ion conductor or a crystalline solid ion conductor; and/or
wherein the solid electrolyte has a crystallization temperature of 400 °C to 600 °C and a glass transition temperature of 400 °C to 432 °C as measured by differential scanning calorimetry of the solid ion conductor.

6. The solid electrolyte of any of claims 1-5, wherein the solid electrolyte has a density of 1.5 grams per cubic centimeter to 3.0 grams per cubic centimeter as measured by a gas pycnometer; and/or
wherein the solid ion conductor has an ion conductivity of 3.4 × 10⁻⁶ siemens per centimeter to 5.0 × 10⁻⁶ siemens per centimeter at 25 °C.

7. The solid electrolyte of any of claims 1-6, wherein the solid electrolyte further comprises a composite solid ion conductor comprising a crystalline solid ion conductor represented by Formula 2:
Formula 2 Liₐ₁B_{b1}Alₘ₁O_{c1}X_{d1}
wherein, in Formula 2,
X is at least one of F, Cl, Br, or I,
3.5 ≤ a1 ≤ 4.5, 3 ≤ b1 < 5.2, 1 ≤ m1 ≤ 3, 11 ≤ c1 ≤ 13, and 0 < d1 ≤ 1.5.

8. The solid electrolyte of any of claims 1-7, wherein the solid electrolyte has a thickness of 0.1 micrometer to 30 micrometers.

9. A method of manufacturing a solid electrolyte, the method comprising:
mechanically milling a lithium source, a boron source, an aluminum source, a Q element source, and a halogen source to provide a glassy solid ion conductor; and
heat treating the glassy solid ion conductor at a temperature equal to or greater than an initial thermal decomposition temperature of the glassy solid ion conductor as measured by differential scanning calorimetry to provide a crystal-containing solid ion conductor represented by Formula 1
Formula 1 LiₐB_{b}AlₘQnO_{c}X_{d}
wherein, in Formula 1,
Q is an element that has an ionic radius that differs from an ionic radius of Al by less than 30 % and has +3 and +5 valence states,
X is at least one of F, Cl, Br, or I,
3.5 ≤ a≤ 4.5, 3 ≤ b < 5.2, 1 ≤ m ≤ 3, 0 < n < 2, 11 ≤ c ≤ 13, and 0 < d ≤ 1.5.

10. The method of claim 9, wherein the providing of the glassy solid ion conductor further comprises, after mechanical milling, pre-heat treating at a temperature in a range of about 600 °C to about 1,300 °C and quenching; and/or
wherein the Q element source includes at least one of Sb₂O₃, Sb₂O₃, V₂O₃, V₂O₅, SbF₃, SbF₅, SbCl₃, SbCl₅, SbCl₂F₃, SbCl₃F₂, Sb(NO₃)₃, Sb(OH)₃, or Sb(OH)₅.

11. The method of claims 9 or 10, wherein the manufacturing the crystal-containing solid ion conductor comprises heat treating the glassy solid ion conductor under an air atmosphere, or disposing insulating films on both sides of the glassy solid ion conductor and then heat treating; and/or
wherein, in the manufacturing of the crystal-containing solid ion conductor, the glassy solid ion conductor is heat treated at a temperature of 600° C or less for 5 minutes to 2 hours.

12. The method of any of claims 9-11, wherein, in the manufacturing of the crystal-containing solid ion conductor, insulating films are arranged on both sides of the glassy solid ion conductor and heat treating is performed at a pressure of 1 megapascals to 50 megapascals and a temperature of 400 °C to 600 °C.

13. A lithium battery comprising:
a cathode, an anode, and a solid electrolyte layer arranged between the cathode and the anode, wherein
at least one of the cathode, the anode, or the solid electrolyte comprises the solid electrolyte of any of claims 1-8.

14. The lithium battery of claim 13, wherein the lithium battery is a lithium ion battery, an all-solid-state battery, or a multilayer ceramic (MLC) battery.

15. The lithium battery of claims 13 or 14, wherein
the lithium battery comprises:
a plurality of cathodes each including a cathode current collector and a cathode active material layer arranged on both sides of the cathode current collector;
a plurality of anodes each including an anode current collector and an anode active material layer arranged on both sides of the anode current collector, wherein the plurality of anodes are alternately arranged between the plurality of cathodes; and
a solid electrolyte alternately arranged between the plurality of cathodes and the plurality of anodes, wherein
at least one of the cathode active material layer or the anode active material layer comprises the solid electrolyte of any of claims 1-8.
